# EUROPEAN PATENT SPECIFICATION

(11) **EP 2 848 025 B1**
(45) Date of publication and mention of the grant of the patent: **13.05.2020**
(21) Application number: 13704785.8
(22) Date of filing: 15.02.2013
(51) Int. Cl.: H04W 16/14, H04W 72/12

(54) **IMPROVED COEXISTENCE INTERFERENCE REPORTING MECHANISM**
VERBESSERTER MECHANISMUS ZUR KOEXISTENZ-INTERFERENZBERICHTERSTATTUNG
MÉCANISME DE RAPPORT D'INTERFÉRENCES DE COEXISTENCE AMÉLIORÉE

(30) Priority: 08.05.2012 EP 12167192
(43) Date of publication of application: 18.03.2015
(73) Proprietor: Panasonic Intellectual Property Corporation of America, Torrance, CA 90503 (US)
(72) Inventor: FUERSAENGER, Martin, 63225 Langen (DE); LOEHR, Joachim, 63225 Langen (DE); WENGERTER, Christian, 63225 Langen (DE); BASU-MALLICK, Prateek, 63225 Langen (DE)
(74) Representative: Grünecker Patent- und Rechtsanwälte PartG mbB
(86) International application number: PCT/EP2013/053118
(87) International publication number: WO 2013/167290

(56) References cited:
- WO-A1-2011/123550
- US-A1- 2009 225 717
- US-A1- 2010 135 256
- US-A1- 2011 243 047

## Description

### FIELD OF THE INVENTION

The invention relates methods for coexistence interference reporting by a mobile terminal in a mobile communication system. The invention is also providing apparatus for performing the methods described herein, as well as computer readable media the instructions of which cause the apparatus and system to perform the methods described herein.

### TECHNICAL BACKGROUND

### Long Term Evolution (LTE)

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio access technology that is highly competitive.

In order to be prepared for further increasing user demands and to be competitive against new radio access technologies, 3GPP introduced a new mobile communication system which is called Long Term Evolution (LTE). LTE is designed to meet the carrier needs for high speed data and media transport as well as high capacity voice support for the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is finalized as Release 8 (LTE Rel. 8). The LTE system represents efficient packet-based radio access and radio access networks that provide full IP-based functionalities with low latency and low cost. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM) based radio access was adopted because of its inherent immunity to multipath interference (MPI) due to a low symbol rate, the use of a cyclic prefix (CP) and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmit power of the user equipment (UE). Many key packet radio access techniques are employed including multiple-input multiple-output (MIMO) channel transmission techniques and a highly efficient control signaling structure is achieved in LTE Rel. 8/9.

### LTE architecture

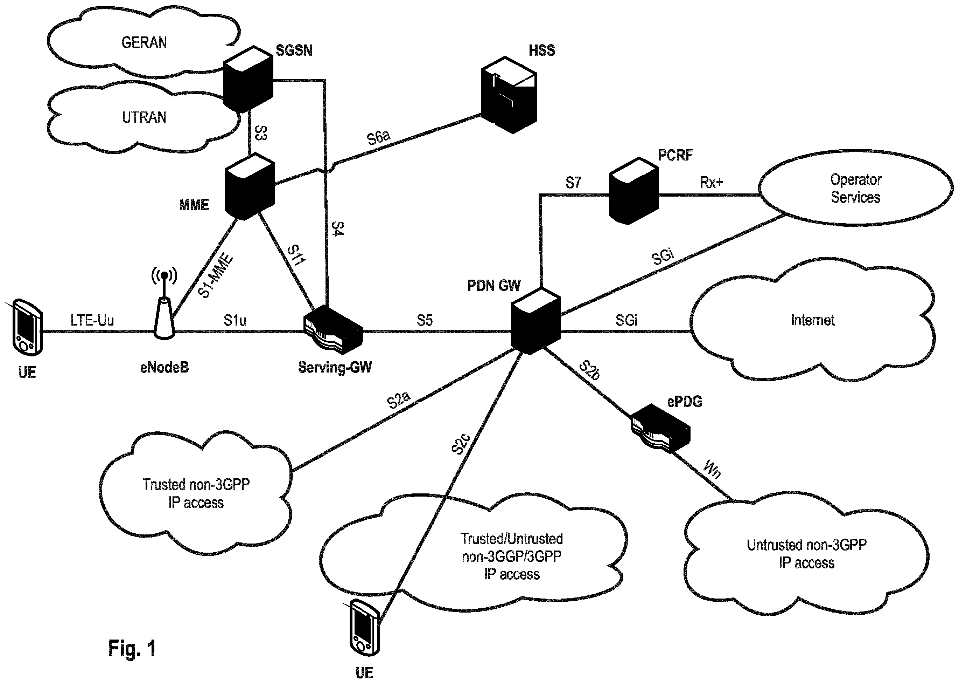

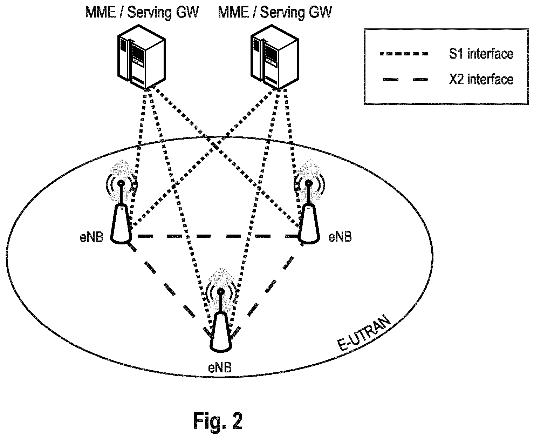

The overall architecture is shown in Fig. 1 and a more detailed representation of the E-UTRAN architecture is given in Fig. 2. The E-UTRAN consists of an eNodeB, providing the E-UTRA user plane (PDCP/RLC/MAC/PHY) and control plane (RRC) protocol terminations towards the user equipment (UE). The eNodeB (eNB) hosts the Physical (PHY), Medium Access Control (MAC), Radio Link Control (RLC) and Packet Data Control Protocol (PDCP) layers that include the functionality of user-plane header-compression and encryption. It also offers Radio Resource Control (RRC) functionality corresponding to the control plane. It performs many functions including radio resource management, admission control, scheduling, enforcement of negotiated uplink Quality of Service (QoS), cell information broadcast, ciphering/deciphering of user and control plane data, and compression/decompression of downlink/uplink user plane packet headers. The eNodeBs are interconnected with each other by means of the X2 interface.

The eNodeBs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNodeBs. The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PDN GW). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME is the key control-node for the LTE access-network. It is responsible for idle mode user equipment tracking and paging procedure including retransmissions. It is involved in the bearer activation/deactivation process and is also responsible for choosing the SGW for a user equipment at the initial attach and at time of intra-LTE handover involving Core Network (CN) node relocation. It is responsible for authenticating the user (by interacting with the HSS). The Non-Access Stratum (NAS) signaling terminates at the MME and it is also responsible for generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

### Further Advancements for LTE (LTE-A)

The frequency spectrum for IMT-Advanced was decided at the World Radiocommunication Conference 2007 (WRC-07). Although the overall frequency spectrum for IMT-Advanced was decided, the actual available frequency bandwidth is different according to each region or country. Following the decision on the available frequency spectrum outline, however, standardization of a radio interface started in the 3rd Generation Partnership Project (3GPP). At the 3GPP TSG RAN #39 meeting, the Study Item description on "Further Advancements for E-UTRA (LTE-Advanced)" was approved. The study item covers technology components to be considered for the evolution of E-UTRA, e.g. to fulfill the requirements on IMT-Advanced. Two major technology components are described in the following.

### Carrier Aggregation in LTE-A for support of wider bandwidth

In carrier aggregation, two or more component carriers (component carriers) are aggregated in order to support wider transmission bandwidths up to 100MHz. Several cells in the LTE system are aggregated into one wider channel in the LTE-Advanced system which is wide enough for 100 MHz even though these cells in LTE are in different frequency bands.

All component carriers can be configured to be LTE Rel. 8/9 compatible, at least when the aggregated numbers of component carriers in the uplink and the downlink are the same. Not all component carriers aggregated by a user equipment may necessarily be Rel. 8/9 compatible. Existing mechanism (e.g. barring) may be used to avoid Rel-8/9 user equipments to camp on a component carrier.

A user equipment may simultaneously receive or transmit one or multiple component carriers (corresponding to multiple serving cells) depending on its capabilities. A LTE-A Rel. 10 user equipment with reception and/or transmission capabilities for carrier aggregation can simultaneously receive and/or transmit on multiple serving cells, whereas an LTE Rel. 8/9 user equipment can receive and transmit on a single serving cell only, provided that the structure of the component carrier follows the Rel. 8/9 specifications.

Carrier aggregation is supported for both contiguous and non-contiguous component carriers with each component carrier limited to a maximum of 110 Resource Blocks in the frequency domain using the 3GPP LTE (Release 8/9) numerology.

It is possible to configure a 3GPP LTE-A (Release 10) compatible user equipment to aggregate a different number of component carriers originating from the same eNodeB (base station) and of possibly different bandwidths in the uplink and the downlink. The number of downlink component carriers that can be configured depends on the downlink aggregation capability of the UE. Conversely, the number of uplink component carriers that can be configured depends on the uplink aggregation capability of the UE. It may not be possible to configure a mobile terminal with more uplink component carriers than downlink component carriers.

In a typical TDD deployment, the number of component carriers and the bandwidth of each component carrier in uplink and downlink is the same. Component carriers originating from the same eNodeB need not to provide the same coverage.

The spacing between centre frequencies of contiguously aggregated component carriers shall be a multiple of 300 kHz. This is in order to be compatible with the 100 kHz frequency raster of 3GPP LTE (Release 8/9) and at the same time preserve orthogonality of the subcarriers with 15 kHz spacing. Depending on the aggregation scenario, the *n* × 300 kHz spacing can be facilitated by insertion of a low number of unused subcarriers between contiguous component carriers.

The nature of the aggregation of multiple carriers is only exposed up to the MAC layer. For both uplink and downlink there is one HARQ entity required in MAC for each aggregated component carrier. There is (in the absence of SU-MIMO for uplink) at most one transport block per component carrier. A transport block and its potential HARQ retransmissions need to be mapped on the same component carrier.

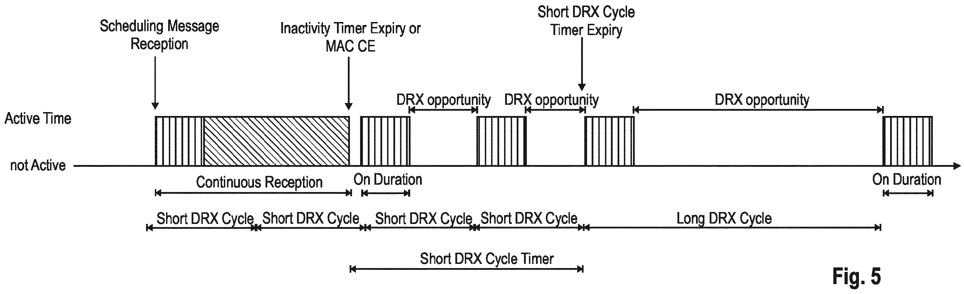

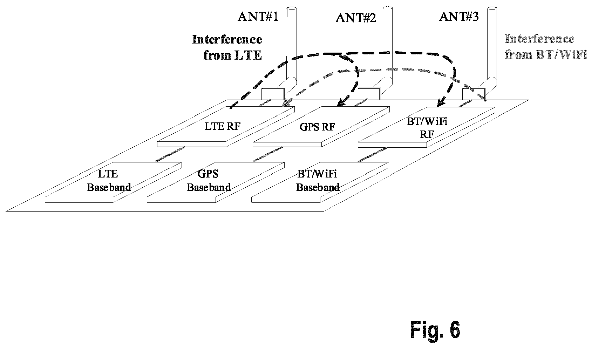

The Layer 2 structure with activated carrier aggregation is shown in Fig. 5 and Fig. 6 for the downlink and uplink respectively. The transport channels are described between MAC and Layer 1, the logical channels are described between MAC and RLC.

When carrier aggregation is configured, the mobile terminal only has one RRC connection with the network. At RRC connection establishment/re-establishment, one cell provides the security input (one ECGI, one PCI and one ARFCN) and the non-access stratum mobility information (e.g. TAI) similarly as in LTE Rel. 8/9. After RRC connection establishment/re-establishment; the component carrier corresponding to that cell is referred to as the downlink Primary Cell (PCell). There is always one and only one downlink PCell (DL PCell) and one uplink PCell (UL PCell) configured per user equipment in connected state. In the downlink, the carrier corresponding to the PCell is the Downlink Primary Component Carrier (DL PCC), while in the uplink it is the Uplink Primary Component Carrier (UL PCC).

Depending on UE capabilities, Secondary Cells (SCells) can be configured to form together with the PCell a set of serving cells. In the downlink, the carrier corresponding to an SCell is a Downlink Secondary Component Carrier (DL SCC), while in the uplink it is an Uplink Secondary Component Carrier (UL SCC).

The characteristics of the downlink and uplink PCell are:
- For each SCell the usage of uplink resources by the UE in addition to the downlink ones is configurable (the number of DL SCCs configured is therefore always larger or equal to the number of UL SCCs, and no SCell can be configured for usage of uplink resources only)
- The downlink PCell cannot be de-activated, unlike SCells
- Re-establishment is triggered when the downlink PCell experiences Rayleigh fading (RLF), not when downlink SCells experience RLF
- Non-access stratum information is taken from the downlink PCell
- PCell can only be changed with handover procedure (i.e. with security key change and RACH procedure)
- PCell is used for transmission of PUCCH
- The uplink PCell is used for transmission of Layer 1 uplink control information
- From a UE viewpoint, each uplink resource only belongs to one serving cell

The configuration and reconfiguration of component carriers can be performed by RRC. Activation and deactivation is done via MAC control elements. At intra-LTE handover, RRC can also add, remove, or reconfigure SCells for usage in the target cell. When adding a new SCell, dedicated RRC signaling is used for sending the system information of the SCell, the information being necessary for transmission / reception (similarly as in Rel-8/9 for handover). In other words, while in connected mode, UEs need not acquire broadcast system information directly from the SCells.

When a user equipment is configured with carrier aggregation there is one pair of uplink and downlink component carriers that is always active. The downlink component carrier of that pair might be also referred to as 'DL anchor carrier'. Same applies also for the uplink.

When carrier aggregation is configured, a user equipment may be scheduled over multiple component carriers simultaneously but at most one random access procedure shall be ongoing at any time. Cross-carrier scheduling allows the PDCCH of a component carrier to schedule resources on another component carrier. For this purpose a component carrier identification field is introduced in the respective DCI formats, called CIF.

A linking between uplink and downlink component carriers allows identifying the uplink component carrier for which the grant applies when there is no-cross-carrier scheduling. The linkage of downlink component carriers to uplink component carrier does not necessarily need to be one to one. In other words, more than one downlink component carrier can link to the same uplink component carrier. At the same time, a downlink component carrier can only link to one uplink component carrier.

### Layer 1/Layer 2 (L1/L2) Control Signaling

In order to inform the scheduled users about their allocation status, transport format and other data-related information (e.g. HARQ information, transmit power control (TPC) commands), L1/L2 control signaling is transmitted on the downlink along with the data. L1/L2 control signaling is multiplexed with the downlink data in a subframe, assuming that the user allocation can change from subframe to subframe. It should be noted that user allocation might also be performed on a TTI (Transmission Time Interval) basis, where the TTI length is a multiple of the sub-frames. The TTI length may be fixed in a service area for all users, may be different for different users, or may even by dynamic for each user. Generally, the L1/2 control signaling needs only be transmitted once per TTI.

The L1/L2 control signaling is transmitted on the Physical Downlink Control Channel (PDCCH). A PDCCH carries a message as a Downlink Control Information (DCI), which includes resource assignments and other control information for a mobile terminal or groups of UEs. In general, several PDCCHs can be transmitted in one subframe.

It should be noted that in 3GPP LTE, assignments for uplink data transmissions, also referred to as uplink scheduling grants or uplink resource assignments, are also transmitted on the PDCCH.

With respect to scheduling grants, the information sent on the L1/L2 control signaling may be separated into the following two categories, Shared Control Information (SCI) carrying Cat 1 information and Downlink Control Information (DCI) carrying Cat 2/3 information.

### Shared Control Information (SCI) carrying Cat 1 information

The shared control information part of the L1/L2 control signaling contains information related to the resource allocation (indication). The shared control information typically contains the following information:
- A user identity indicating the user(s) that is/are allocated the resources.
- RB allocation information for indicating the resources (Resource Blocks (RBs)) on which a user(s) is/are allocated. The number of allocated resource blocks can be dynamic.
- The duration of assignment (optional), if an assignment over multiple sub-frames (or TTIs) is possible.

Depending on the setup of other channels and the setup of the Downlink Control Information (DCI) - see below - the shared control information may additionally contain information such as ACK/NACK for uplink transmission, uplink scheduling information, information on the DCI (resource, MCS, etc.).

### Downlink Control Information (DCI) carrying Cat 2/3 information

The downlink control information part of the L1/L2 control signaling contains information related to the transmission format (Cat 2 information) of the data transmitted to a scheduled user indicated by the Cat 1 information. Moreover, in case of using (Hybrid) ARQ as a retransmission protocol, the Cat 2 information carries HARQ (Cat 3) information. The downlink control information needs only to be decoded by the user scheduled according to Cat 1. The downlink control information typically contains information on:
- Cat 2 information: Modulation scheme, transport-block (payload) size or coding rate, MIMO (Multiple Input Multiple Output)-related information, etc. Either the transport-block (or payload size) or the code rate can be signaled. In any case these parameters can be calculated from each other by using the modulation scheme information and the resource information (number of allocated resource blocks)
- Cat 3 information: HARQ related information, e.g. hybrid ARQ process number, redundancy version, retransmission sequence number

### Downlink & Uplink Data Transmission

Regarding downlink data transmission, L1/L2 control signaling is transmitted on a separate physical channel (PDCCH), along with the downlink packet data transmission. This L1/L2 control signaling typically contains information on:
- The physical resource(s) on which the data is transmitted (e.g. subcarriers or subcarrier blocks in case of OFDM, codes in case of CDMA). This information allows the mobile terminal (receiver) to identify the resources on which the data is transmitted.
- The Transport Format, which is used for the transmission. This can be the transport block size of the data (payload size, information bits size), the MCS (Modulation and Coding Scheme) level, the Spectral Efficiency, the code rate, etc. This information (usually together with the resource allocation (e.g. the number of resource blocks assigned to the user equipment)) allows the user equipment (receiver) to identify the information bit size, the modulation scheme and the code rate in order to start the demodulation, the de-rate-matching and the decoding process. The modulation scheme may be signaled explicitly.

- Hybrid ARQ (HARQ) information:
   ▪ HARQ process number: Allows the user equipment to identify the hybrid ARQ process on which the data is mapped.
   ▪ Sequence number or new data indicator (NDI): Allows the user equipment to identify if the transmission is a new packet or a retransmitted packet. If soft combining is implemented in the HARQ protocol, the sequence number or new data indicator together with the HARQ process number enables soft-combining of the transmissions for a PDU prior to decoding.
   ▪ Redundancy and/or constellation version: Tells the user equipment, which hybrid ARQ redundancy version is used (required for de-rate-matching) and/or which modulation constellation version is used (required for demodulation).
- UE Identity (UE ID): Tells for which user equipment the L1/L2 control signaling is intended for. In typical implementations this information is used to mask the CRC of the L1/L2 control signaling in order to prevent other user equipments to read this information.

To enable an uplink packet data transmission, L1/L2 control signaling is transmitted on the downlink (PDCCH) to tell the user equipment about the transmission details. This L1/L2 control signaling typically contains information on:
- The physical resource(s) on which the user equipment should transmit the data (e.g. subcarriers or subcarrier blocks in case of OFDM, codes in case of CDMA).
- The Transport Format, the user equipment should use for the transmission. This can be the transport block size of the data (payload size, information bits size), the MCS (Modulation and Coding Scheme) level, the Spectral Efficiency, the code rate, etc. This information (usually together with the resource allocation (e.g. the number of resource blocks assigned to the user equipment)) allows the user equipment (transmitter) to pick the information bit size, the modulation scheme and the code rate in order to start the modulation, the rate-matching and the encoding process. In some cases the modulation scheme maybe signaled explicitly.

- Hybrid ARQ information:
   ▪ HARQ Process number: Tells the user equipment from which hybrid ARQ process it should pick the data.
   ▪ Sequence number or new data indicator: Tells the user equipment to transmit a new packet or to retransmit a packet. If soft combining is implemented in the HARQ protocol, the sequence number or new data indicator together with the HARQ process number enables soft-combining of the transmissions for a protocol data unit (PDU) prior to decoding.
   ▪ Redundancy and/or constellation version: Tells the user equipment, which hybrid ARQ redundancy version to use (required for rate-matching) and/or which modulation constellation version to use (required for modulation).
- UE Identity (UE ID): Tells which user equipment should transmit data. In typical implementations this information is used to mask the CRC of the L1/L2 control signaling in order to prevent other user equipments to read this information.

There are several different possibilities how to exactly transmit the information pieces mentioned above in uplink and downlink data transmission. Moreover, in uplink and downlink, the L1/L2 control information may also contain additional information or may omit some of the information. For example:
- HARQ process number may not be needed, i.e. is not signaled, in case of a synchronous HARQ protocol.
- A redundancy and/or constellation version may not be needed, and thus not signaled, if Chase Combining is used (always the same redundancy and/or constellation version) or if the sequence of redundancy and/or constellation versions is pre-defined.
- Power control information may be additionally included in the control signaling.
- MIMO related control information, such as e.g. pre-coding, may be additionally included in the control signaling.
- In case of multi-codeword MIMO transmission transport format and/or HARQ information for multiple code words may be included.

For uplink resource assignments (on the Physical Uplink Shared Channel (PUSCH)) signaled on PDCCH in LTE, the L1/L2 control information does not contain a HARQ process number, since a synchronous HARQ protocol is employed for LTE uplink. The HARQ process to be used for an uplink transmission is given by the timing. Furthermore, it should be noted that the redundancy version (RV) information is jointly encoded with the transport format information, i.e. the RV info is embedded in the transport format (TF) field. The Transport Format (TF) respectively modulation and coding scheme (MCS) field has for example a size of 5 bits, which corresponds to 32 entries. 3 TF/MCS table entries are reserved for indicating redundancy versions (RVs) 1, 2 or 3. The remaining MCS table entries are used to signal the MCS level (TBS) implicitly indicating RV0. The size of the CRC field of the PDCCH is 16 bits.

For downlink assignments (PDSCH) signaled on PDCCH in LTE the Redundancy Version (RV) is signaled separately in a two-bit field. Furthermore the modulation order information is jointly encoded with the transport format information. Similar to the uplink case there is 5 bit MCS field signaled on PDCCH. 3 of the entries are reserved to signal an explicit modulation order, providing no Transport format (Transport block) info. For the remaining 29 entries modulation order and Transport block size info are signaled.

### DRX (Discontinuous Reception)

DRX functionality can be configured for RRC_IDLE, in which case the UE uses either the specific or default DRX value (defaultPagingCycle); the default is broadcasted in the System Information, and can have values of 32, 64, 128 and 256 radio frames. If both specific and default values are available, the shorter value of the two is chosen by the UE. The UE needs to wake up for one paging occasion per DRX cycle, the paging occasion being one subframe.

DRX functionality can be also configured for an "RRC_CONNECTED" UE, so that it does not always need to monitor the downlink channels. In order to provide reasonable battery consumption of user equipment, 3GPP LTE (Release 8/9) as well as 3GPP LTE-A (Release 10) provides a concept of discontinuous reception (DRX). Technical Standard TS 36.321 Chapter 5.7 explains the DRX and is incorporated by reference herein.

The following parameters are available to define the DRX UE behavior; i.e. the On-Duration periods at which the mobile node is active, and the periods where the mobile node is in a DRX mode.
- On duration: duration in downlink sub-frames that the user equipment, after waking up from DRX, receives and monitors the PDCCH. If the user equipment successfully decodes a PDCCH, the user equipment stays awake and starts the inactivity timer; [1-200 subframes; 16 steps: 1-6, 10-60, 80, 100, 200]
- DRX inactivity timer: duration in downlink sub-frames that the user equipment waits to successfully decode a PDCCH, from the last successful decoding of a PDCCH; when the UE fails to decode a PDCCH during this period, it re-enters DRX. The user equipment shall restart the inactivity timer following a single successful decoding of a PDCCH for a first transmission only (i.e. not for retransmissions). [1-2560 subframes; 22 steps, 10 spares: 1-6, 8, 10-60, 80, 100-300, 500, 750, 1280, 1920, 2560]
- DRX Retransmission timer: specifies the number of consecutive PDCCH subframes where a downlink retransmission is expected by the UE after the first available retransmission time. [1-33 subframes, 8 steps: 1, 2, 4, 6, 8, 16, 24, 33]
- DRX short cycle: specifies the periodic repetition of the on duration followed by a possible period of inactivity for the short DRX cycle. This parameter is optional. [2-640 subframes ; 16 steps: 2, 5, 8, 10, 16, 20, 32, 40, 64, 80, 128, 160, 256, 320, 512, 640]
- DRX short cycle timer: specifies the number of consecutive subframes the UE follows the short DRX cycle after the DRX Inactivity Timer has expired. This parameter is optional.[1-16 subframes]
- Long DRX Cycle Start offset: specifies the periodic repetition of the on duration followed by a possible period of inactivity for the DRX long cycle as well as an offset in subframes when on-duration starts (determined by formula defined in TS 36.321 section 5.7); [cycle length 10-2560 subframes; 16 steps: 10, 20, 30, 32, 40, 64, 80, 128, 160, 256, 320, 512, 640, 1024, 1280, 2048, 2560; offset is an integer between [0 - subframe length of chosen cycle]]

The total duration that the UE is awake is called "Active time". The Active Time includes the on-duration of the DRX cycle, the time UE is performing continuous reception while the inactivity timer has not expired and the time UE is performing continuous reception while waiting for a downlink retransmission after one HRQ RTT. Similarly, for the uplink the UE is awake at the subframes where uplink retransmission grants can be received, i.e. every 8ms after initial uplink transmission until maximum number of retransmissions is reached. Based on the above, the minimum active time is of length equal to on-duration, and the maximum is undefined (infinite).

The operation of DRX gives the mobile terminal the opportunity to deactivate the radio circuits repeatedly (according to the currently active DRX cycle) in order to save power. Whether the UE indeed remains in DRX (i.e. is not active) during the DRX period may be decided by the UE; for example, the UE usually performs inter-frequency measurements which cannot be conducted during the On-Duration, and thus need to be performed some other time, during the DRX opportunity of time.

The parameterization of the DRX cycle involves a trade-off between battery saving and latency. For example, in case of a web browsing service, it is usually a waste of resources for a UE to continuously receive downlink channels while the user is reading a downloaded web page. On the one hand, a long DRX period is beneficial for lengthening the UE's battery life. On the other hand, a short DRX period is better for faster response when data transfer is resumed - for example when a user requests another web page.

To meet these conflicting requirements, two DRX cycles - a short cycle and a long cycle - can be configured for each UE; the short DRX cycle is optional, i.e. only the long DRX cycle is used. The transition between the short DRX cycle, the long DRX cycle and continuous reception is controlled either by a timer or by explicit commands from the eNodeB. In some sense, the short DRX cycle can be considered as a confirmation period in case a late packet arrives, before the UE enters the long DRX cycle. If data arrives at the eNodeB while the UE is in the short DRX cycle, the data is scheduled for transmission at the next on-duration time, and the UE then resumes continuous reception. On the other hand, if no data arrives at the eNodeB during the short DRX cycle, the UE enters the long DRX cycle, assuming that the packet activity is finished for the time being.

During the Active Time the UE monitors PDCCH, reports SRS (Sounding Reference Signal) as configured and reports CQI (Channel Quality Information)/PMI (Precoding Matrix Indicator)/RI (Rank Indicator)/PTI (Precoder Type Indication) on PUCCH. When UE is not in Active time, type-O-triggered SRS and CQI/PMI/RI/PTI on PUCCH may not be reported. If CQI masking is set up for the UE, the reporting of CQI/PMI/RI/PTI on PUCCH is limited to On Duration.

Available DRX values are controlled by the network and start from non-DRX up to x seconds. Value x may be as long as the paging DRX used in RRC_IDLE. Measurement requirements and reporting criteria can differ according to the length of the DRX interval, i.e. long DRX intervals may have more relaxed requirements (for more details see further below). When DRX is configured, periodic CQI reports can only be sent by the UE during "active-time". RRC can further restrict periodic CQI reports so that they are only sent during the on-duration.

Fig. 5 discloses an example of DRX. The UE checks for scheduling messages (indicated by its C-RNTI, cell radio network temporary identity, on the PDCCH) during the "on duration" period, which is the same for the long DRX cycle and the short DRX cycle. When a scheduling message is received during an "on duration", the UE starts an "inactivity timer" and monitors the PDCCH in every subframe while the Inactivity Timer is running. During this period, the UE can be regarded as being in a continuous reception mode. Whenever a scheduling message is received while the Inactivity Timer is running, the UE restarts the Inactivity Timer, and when it expires the UE moves into a short DRX cycle and starts a "short DRX cycle timer". The short DRX cycle may also be initiated by means of a MAC Control Element. When the short DRX cycle timer expires, the UE moves into a long DRX cycle.

In addition to this DRX behaviour, a 'HARQ Round Trip Time (RTT) timer' is defined with the aim of allowing the UE to sleep during the HARQ RTT. When decoding of a downlink transport block for one HARQ process fails, the UE can assume that the next retransmission of the transport block will occur after at least 'HARQ RTT' subframes. While the HARQ RTT timer is running, the UE does not need to monitor the PDCCH. At the expiry of the HARQ RTT timer, the UE resumes reception of the PDCCH as normal.

There is only one DRX cycle per user equipment. All aggregated component carriers follow this DRX pattern.

### In-Device Coexistence

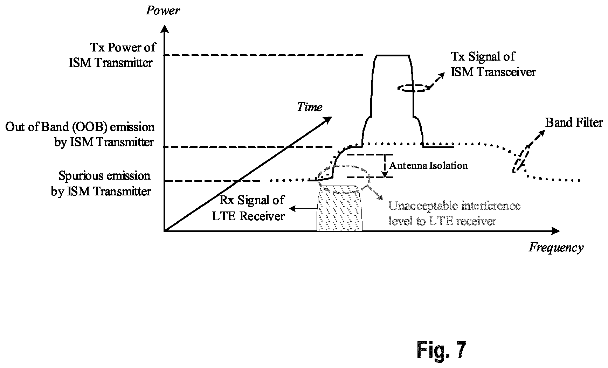

For ubiquitous network access user equipments (UEs) are equipped with multiple radio transceivers, i.e. LTE, WiFi, and Bluetooth transceivers, and GNSS receivers. One resulting challenge lies in trying to avoid coexistence interference between those collocated radio transceivers. Figure 6 shows an example of coexistence interference. Due to extreme proximity of multiple radio transceivers within the same user equipment, the transmit power of one transmitter may be much higher than the received power level of another receiver. Given sufficient frequency separation and appropriate filters the transmit signal may not result in significant interference, but for some scenarios, e.g. different transceivers within the same user equipment operating on adjacent frequencies, current state-of-the-art filter technology might not provide sufficient protection against spurious emission. An illustration of an exemplary problem is shown in Figure 7.

### Coexistence interference scenario

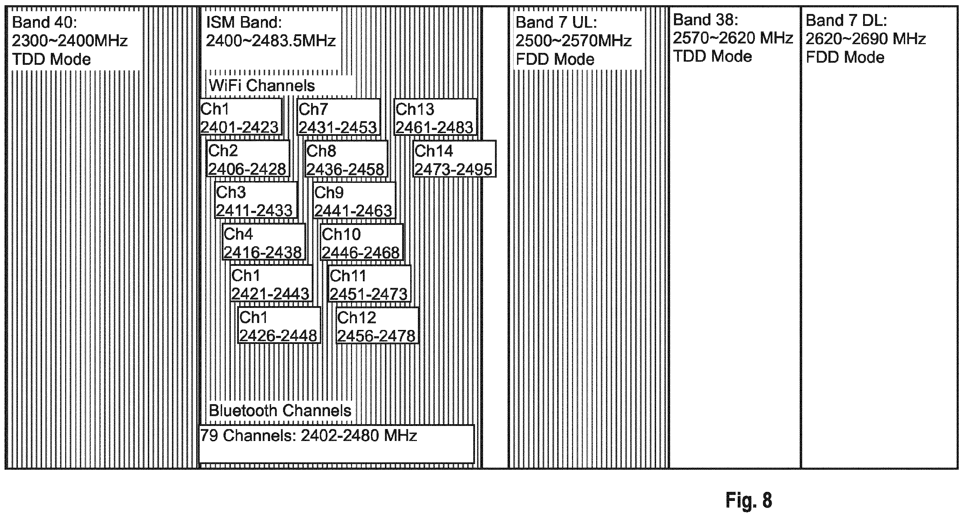

Exemplarily shown here are coexistence interference scenarios between LTE radio and other radio technologies concerning the 3GPP frequency bands around the 2.4GHz ISM band. The band layout is shown in Figure 8.

### LTE coexisting with WiFi

There are 14 channels in the ISM band (from 2401 MHz to 2495 MHz) used for WiFi operation. Each channel has 5 MHz separation from the adjacent channels (with an exception of channel 14). The number of allowed channels for WiFi varies between countries (mostly 1 to 13 are allowed).

Within LTE band 40 the LTE transmitter will affect the WiFi receiver and vice-versa. As Band 7 is unly used for UL communications in LTE, the WiFi receiver will be affected by LTE UL transmitter.

### LTE coexisting with Bluetooth

Bluetooth operates in 79 channels of 1 MHz each in the ISM band between 2402 MHz and 2480 MHz. Similar as WiFi case, the activities of LTE band 40 and BT will disturb each other, and the transmission of LTE in band 7 will affect the BT reception as well.

### LTE coexisting with GNSS

Examples of GNSS include GNSS systems (as GPS, Modernized GPS, Galileo, GLONASS, Space Based Augmentation Systems (SBAS), and Quasi Zenith Satellite System (QZSS)) operate in various frequencies globally with country specific deviations. The problematic cases for collocation of LTE and GNSS include Band 13 (UL: 777-787 MHz) /14 (UL: 788-798 MHz) which can cause interference to L1/E1 frequency of GNSS (1575.42 MHz) as it is close to the second harmonics of band 13/14 (1554-1574 MHz for band 13, 1576-1596 MHz for band 14), Galileo might support 2.5 GHz for GNSS, which will be affected by band 7 LTE and Indian Regional Navigation Satellite System uses IRNSS standard position and restricted services which are transmitted on L5 (1164-1215 MHz) and S (2483.5-2500 MHz) bands, which will be affected by band 7 LTE.

### Solutions to In-device coexistence (IDC) problems

Standardization efforts are ongoing in 3GPP, mostly in RAN Working Group 2, and are expected to be reflected in the standard with Release 11. The following section covers the agreements reached in above indicated working group.

The user equipment (UE) judges an LTE frequency as unusable when the ongoing IDC problem on this frequency between collocated LTE and ISM radio cannot be solved by the UE itself.

The assumption is that existing LTE measurements and/or UE internal coordination can be used as a baseline to trigger an indication of a In-device coexistence problem. What exactly triggers the indication is left to UE implementation. It is assumed that the network can trust the UE on the assessment of the IDC problem.

Upon triggering, the user equipment (UE) can send an indication to the network to report the IDC problem(s). It will not be specified when exactly the UE will send this indication. Only ongoing IDC interference on the serving or non-serving frequencies is indicated, this means assumptions or predictions of potential interference is not triggering an IDC problem.

In principal, an eNodeB may respond according to two possible approaches, namely by means of frequency division multiplexing or time division multiplexing reconfiguration of the UE affected by the IDC problem.

For the frequency division multiplexing (FDM) solution the UE will be re-allocated to a LTE frequency band not affected by the ISM interference. Concerning the time division multiplexing (TDM) solution, the LTE Rel-8/9/10 DRX mechanism is considered as a baseline to provide varying time division multiplexing (TDM) patterns (i.e. LTE scheduling and unscheduled periods) for resolving the IDC issues. A DRX based TDM solution should be used in a predictable way, i.e. the eNB should ensure a predictable pattern of unscheduled periods by means of the DRX mechanism.

All necessary/available assistant information for both frequency division multiplexing (FDM) and time division multiplexing (TDM) solutions is sent together to the eNodeB through the IDC indication. In case of an inter-eNB handover, the assistant information is transferred from the source to the target eNodeB.

The IDC indication is conveyed in a new UL-DCCH Message (i.e. RRC signalling) and can also be reused to send the updated assistant information, including the case that there is no longer an IDC problem.

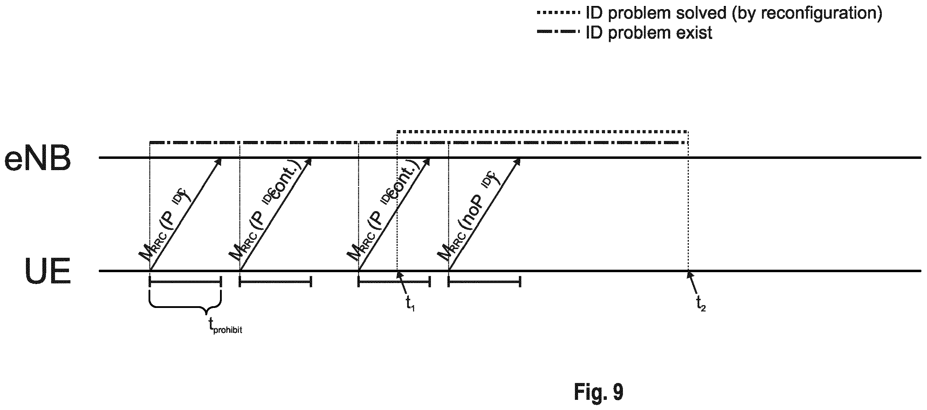

The UE signaling for the IDC problem indication is shown in Figure 9.

An user equipment (UE) can autonomously deny LTE transmission to protect ISM rare cases if other solutions cannot be used. It is assumed that the UE would deny ISM transmission in order to ensure connectivity with the eNodeB to perform necessary mechanisms to resolve IDC issues.

A prohibit mechanism is used to restrict the interval at which the UE may send IDC indications. It is for further study (FFS) whether the network indicates via dedicated signaling if the UE is allowed to trigger and send an IDC indication. It is also FFS whether the network indicates for which frequencies the UE may trigger an IDC indication and if so, how this information is provided.

WO 2011/123550 A1 relates to in-device coexistence interference reporting in an LTE equipped mobile terminal (UE). Interference is characterized as radiative, conductive and/or resource collisions between two radio technologies. In this context, it is proposed for the mobile terminal (UE) to identify existing or potential coexistence issues and send a message to the base station (eNB) including, among others, i) identification of resources experiencing coexistence issues, ii) identification of resources experiencing fewer coexistence issues, iii) indication of LTE events being denied in arbitration, iv) a modified channel quality indicator (CQI), and v) a modified power headroom report (PHR).

US 2010/0135256 A1 relates to allocation of multiple radio communication periods to a mobile station (MS) supporting a co-existence mode. The co-existence mode allows for minimizing interference between adjacent Bluetooth or Wi-Fi and IEEE 802.16m frequency bands. For the coexistence-mode, the mobile station (MS) transmits a "co-existence mode request" message to the base station (BS) and receives in response a "co-existence mode response" message including information about a position of the start frame for the co-existence mode. If the mobile station (MS) determines that the Wi-Fi or Bluetooth data transmission and reception is no longer needed, it may transmit a "co-existence mode termination request" message, and, in response, receives from the base station (BS) a "co-existence mode termination response" message instructing the mobile station to operate in an IEEE 602.16m normal mode.

US 2011/0243047 A1 relates to a very similar mobile terminal (UE) compared that of document D1. Specifically, the mobile terminal (UE) identifies existing or potential coexistence issues and sends a message to the base station (eNB). In response to a request for reconfiguration of a timing-schedule of an LTE radio, the base station (eNB) grants the request and the mobile terminal (UE) configures its timing according to the included parameters.

### Disadvantages of the Prior Art

From the above indicated signaling mechanism it can be readily appreciated that the user equipment (UE) may signal that there is no longer an IDC problem to the eNodeB by transmitting updated IDC assistant information. However, this information provides for the disadvantage that there is only the possibility to indicate the solved IDC problem.

As will become apparent from the following discussions, the information indicating that the IDC problem has been solved does not provide the eNodeB with sufficient information for it to avoid/evade potential IDC problems in the future.

Further, once the user equipment (UE) has indicated that IDC problem is solved to the eNodeB, the presently discussed IDC signaling mechanism assumes the IDC indication to be over such that the UE may only indicate a new (or changed) IDC problem.

Specifically, from the information indicating that the IDC problem has been solved the eNodeB has no means to distinguish between an IDC problem that was solved due to the reconfiguration that was applied to the UE and an IDC problem that was solved due to the cause of the IDC problem (i.e. the interference due to the ISM activity has stopped) has stopped.

Exemplary, the eNodeB receives from the UE an indication that the IDC problem has been solved. In this case, the eNodeB does, however, not know the reason for the IDC problem to be solved.

On the one hand, if the eNodeB would suspect that the solution of the IDC problem was resulting from the reconfiguration of the frequency division multiplexing or time division multiplexing of the affected UE, the eNodeB cannot revert to the previous configuration for the UE. Specifically, the eNodeB may never revert to the previous configuration for the UE since the coexisting transceiver causing the IDC problem may still operate at the UE.

On the other hand, if the eNodeB would suspect that the solution of the IDC problem was resulting from a stopped coexistence interference at the UE, the eNodeB may revert back to the previous configuration for the UE and may be faced with the same IDC problem in case that the coexisting transceiver is still operating at the UE.

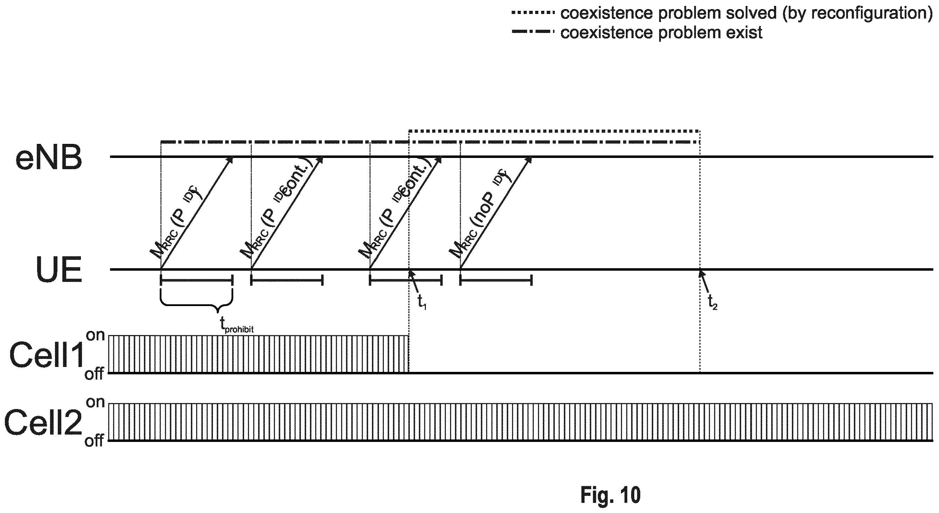

In other words, the above noted lack of information at eNodeB side can exemplary lead to a mis-configuration of the UE which impacts on the UE's data throughput as show in Figure 10.

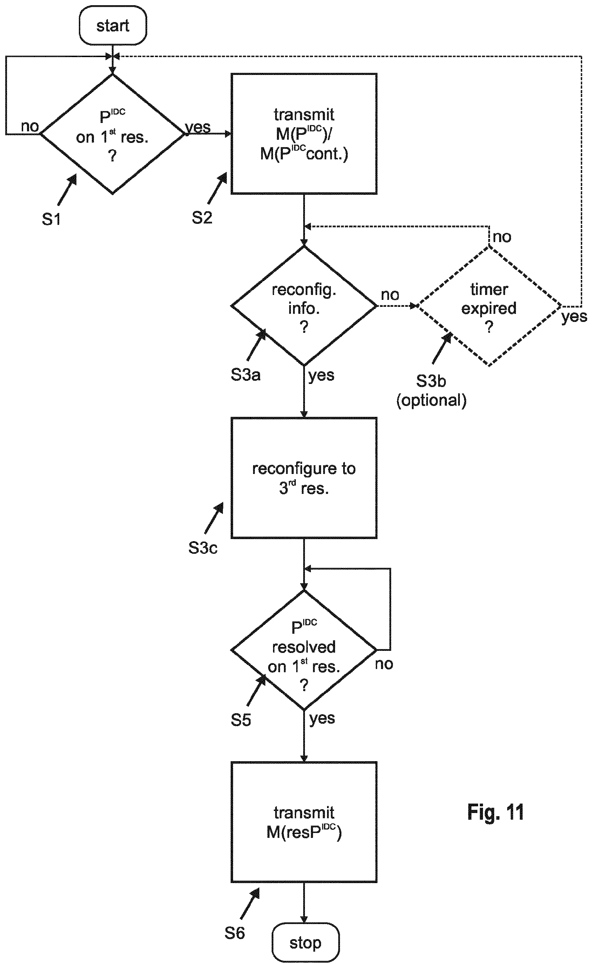

As seen in Figure 11, the eNodeB has no information on the operation of the coexisting transceiver when the IDC problem stops at time point *t*₂, i.e. the ISM activity has stopped. As a consequence eNodeB will not reactivate cell 1 that was deactivated in order to solve the IDC problem. Accordingly, the throughput of the UE is impaired.

### SUMMARY OF THE INVENTION

The present invention strives to avoid the various disadvantages mentioned above.

One object of the invention is to propose an improved interference reporting mechanism for a user equipment to provide the base station with sufficient information for it to avoid potential IDC problems after reception of an indication of an IDC problem. Another object of the invention is to allow for the user equipment to signal information on coexistence interference by the user equipment to the base station without requiring additional signaling overhead.

At least one of the above objects is solved by the subject matter of the independent claims. Advantageous embodiments are subject to the dependent claims.

According to a first aspect, the invention suggests an improvement to the reporting of coexistence interference by the user equipment (UE) such that the base station is provided with an indication of whether or not the interference condition persists for potential communications with the base station (e.g. eNodeB) via a resource for which coexistence interference was previously reported. In the following, details are given on the reporting of the indication whether or not the interference condition persists.

In the invention, the term "resource" is used in connection with communications between the UE and the base station (e.g. eNodeB) and/or for communications between the UE and a coexistent wireless communication device. The term "resource" is used to denote the availability of a physical resource for the UE to communicate with the base station or coexistent wireless communication device. In more detail, a "resource" specifies a time-frequency resource which is allocated to the UE for communication.

Accordingly, a change from a first to a different (e.g. third) resource for the UE results in the UE being allocated with a different time-frequency resource for communication with the base station.

In general, a same scenario is assumed as described with regard to Fig. 11 and the explanation of the problem.

In particular, a user equipment (UE) is assumed to be in a communication system including a base station (e.g. eNodeB) and at least another wireless communication device. The other wireless communicating device may be for example a Bluetooth communication device, a WiFi communication device or a satellite including a GNSS transmitter.

In the following, the wireless communication device takes the role of a coexisting communication device. However, as apparent from the previous description, coexistence interference depends on both: the configuration of the communication of the UE with the base station and that of the communication of the UE with the coexisting communication device.

Accordingly, communications by the UE with a coexisting communication device may not always result in coexistence interference for communications of the UE with the base station.

Further, the UE is assumed to be in communication with the base station via a first resource and configured for communication with the wireless communication device via a second resource.

With the above definition of the term "resource" it can be readily appreciated that the UE can (already) determine from its configuration to the second resource whether or not there will be coexistence interference with communications (actually) performed with the base station via a first resource. In other words, a potential coexistence interference condition may be detected at the UE prior to the UE communicating with the coexistent wireless communication device via the second resource.

For the above scenario, the UE detects an interference condition between the communication with the base station via the first resource and a communication with the wireless communication device via the second resource. An already indicated, an interference condition may be detected by the UE prior to the UE communicating with the base station and the wireless communication device.

In other words, in case an interference condition is detected by the UE, communications by the UE with the base station and with the wireless communication device are affected by coexistence interference when said communications with the base station are performed via the first resource and said communications with the wireless communication device are performed via the second resource.

When an interference condition is detected by the UE, the UE reports the interference condition to the base station.

In response to reporting the interference condition, the UE may receive at a later point in time reconfiguration information indicating a different (e.g. third) resource for communication with the base station and may perform reconfiguration of the communication with the base station to the indicated third resource.

Apparently, the UE may only receive reconfiguration information from the base station in case the base station is aware of a resource which would allow for communication without coexistence interference. Accordingly, there may be cases in which the UE does not interference condition to the base station. However, said cases are disregarded in the context of the invention.

According to this first aspect, the UE performs a detection of whether or not the interference condition persists for potential communication with the base station via the first resource, specifically after reconfiguration of the communication with the base station to the third resource.

As exemplified earlier, there may be various reasons for the interference condition to be resolved (i.e. for the interference condition not to persist), for example, when a communication with the coexistent wireless communication device terminates, when the communication with the coexistent wireless communication device is also reconfigured to a different resource or when the communication behavior with the coexisting wireless communication device changes.

In case of the detection of the interference condition having been resolved, the UE reports an interference resolution, regarding the communications via the first resource, to the base station. Thereby, the user equipment (UE) advantageously provides the base station with sufficient information for it to avoid potential IDC problems after reception of an indication of an IDC problem.

The present invention provides a method for interference reporting by a mobile terminal in a mobile communication system including a base station and a wireless communication device. The mobile terminal is in communication with the base station via a first resource and is configured for communication with the wireless communication device via a second resource.

In this method, the mobile terminal detects an interference condition between the communication with the base station via the first resource and a communication with the wireless communication device via the second resource; reports on the interference condition to the base station; receives reconfiguration information indicating a third resource for communication with the base station and reconfigures the communication with the base station to the third resource;

Further, the mobile terminal detects whether or not the interference condition persists for potential communications with the base station via the first resource, and, in case the interference condition has been resolved, reports on an interference resolution to the base station for communications via the first resource.

According to an advantageous embodiment of the invention which can be used in addition or alternatively to the above, the mobile terminal detects whether or not the interference condition persists for potential communications with the base station via the first resource after it reports on an interference avoidance to the base station, in case there is no interference condition between the reconfigured communication with the base station via the third resource and the communication with the wireless communication device via the second resource.

According to an advantageous embodiment of the invention which can be used in addition or alternatively to the above, the mobile terminal repeatedly detects whether or not the interference condition persists for potential communications with the base station via the first resource until detection that the interference condition has been resolved.

According to an advantageous embodiment of the invention which can be used in addition or alternatively to the above, the mobile terminal detects whether or not the interference condition persists for potential communications with the base station via the first resource including determining if the communication with the wireless communication device via the second resource has been terminated, and/or if the communication with the wireless communication device has been reconfigured.

According to an advantageous embodiment of the invention which can be used in addition or alternatively to the above, the mobile terminal detects interference conditions between uplink and/or downlink transmissions with the base station via the first resource and uplink and/or downlink transmissions with the wireless communication device via the second resource.

According to an advantageous embodiment of the invention which can be used in addition or alternatively to the above, the mobile terminal reports on the interference condition including transmitting an indication of the first resource to the base station.

According to an advantageous embodiment of the invention which can be used in addition or alternatively to the above, the mobile terminal reports on the interference condition including transmitting a radio resource control, RRC, message via an uplink distributed control channel, UL-DCCH, message to the base station.

According to an advantageous embodiment of the invention which can be used in addition or alternatively to the above, the mobile terminal reports on an interference avoidance including transmitting another radio resource control, RRC, message via an uplink distributed control channel, UL-DCCH, message to the base station, wherein the other RRC message optionally includes an indication of the first resource for which the interference condition was detected.

According to an advantageous embodiment of the invention which can be used in addition or alternatively to the above, the mobile terminal reports on the interference resolution by including an indication on the interference resolution for communications via the first resource within: a further RRC message, a power headroom report, PHR, message, an extended power headroom report, e-PHR, message, a channel quality identifier, CQI, message, or a buffer status report, BSR, message to be transmitted by the mobile terminal to the base station.

According to an advantageous embodiment of the invention which can be used in addition or alternatively to the above, in case the mobile terminal uses a PHR/e-PHR message for reporting the interference resolution to the base station, a first value of a reserved bit (R-bit) of the PHR/e-PHR message indicates a resolved interference condition to the base station for communications via the first resource.

According to an advantageous embodiment of the invention which can be used in addition or alternatively to the above, in case the mobile terminal uses a PHR/e-PHR message for reporting the interference resolution to the base station, the transmission of the PHR/e-PHR message including the first value is triggered upon detection, by the mobile terminal, that the interference condition has been resolved for communications via the first resource.

According to an advantageous embodiment of the invention which can be used in addition or alternatively to the above, in case the mobile terminal uses a PHR/e-PHR message for reporting the interference resolution to the base station, a second value of a reserved bit (R-bit) of the PHR/e-PHR message indicates a persisting interference condition for communications via the first resource, and the mobile terminal transmits PHR/e-PHR messages including the second value during a time period between the detection of the interference condition for communications with the base station via the first resource and the detection that the interference condition has been resolved for communications via the first resource.

According to an advantageous embodiment of the invention which can be used in addition or alternatively to the above, in case the mobile terminal uses an e-PHR message for reporting on the interference resolution to the base station, another reserved bit of the e-PHR message indicates the communication technology used for communicating with the wireless communication device via the second resource.

According to an advantageous embodiment of the invention which can be used in addition or alternatively to the above, in case the mobile terminal uses an e-PHR message for reporting on the interference resolution to the base station, at least one further reserved bit of the e-PHR message indicates the interference condition on a per-cell basis of the cells included in the first resource for which the interference condition has been detected.

The invention additionally provides for a mobile terminal for interference reporting in a mobile communication system including a base station and a wireless communication device. The mobile terminal is in communication with the base station via a first resource and is configured for communication with the wireless communication device via a second resource. The mobile terminal comprises a processor, a transmitting circuit and a receiving circuit.

The processor of the mobile terminal is configured to detect an interference condition between the communication with the base station via the first resource and a communication with the wireless communication device via the second resource; and the transmitting circuit is configured to report on the interference condition to the base station. Further, the receiving circuit of the mobile terminal is configured to receive reconfiguration information indicating a third resource for communication with the base station, and the processor is configured to reconfigure the communication with the base station to the third resource. The processor of the mobile terminal is further configured to detect whether or not the interference condition persists for potential communications with the base station via the first resource, and, in case the interference condition has been resolved, the transmitting circuit is configured to report on an interference resolution to the base station for communications via the first resource.

According to an advantageous embodiment of the invention which can be used in addition or alternatively to the above, the transmitting circuit of the mobile terminal is further configured to report on an interference avoidance to the base station, in case there is no interference condition between the reconfigured communication with the base station via the third resource and the communication with the wireless communication device via the second resource, and the processor is configured to detect whether or not the interference condition persists for potential communications with the base station via the first resource after the transmitting circuit reports on the interference avoidance to the base station.

According to an advantageous embodiment of the invention which can be used in addition or alternatively to the above, the processor of the mobile terminal is configured to repeatedly detect whether or not the interference condition persists for potential communications with the base station via the first resource until detection that the interference condition has been resolved.

According to an advantageous embodiment of the invention which can be used in addition or alternatively to the above, the processor of the mobile terminal is configured to detects whether or not the interference condition persists for potential communications with the base station via the first resource including determining if the communication with the wireless communication device via the second resource has been terminated, and/or if the communication with the wireless communication device has been reconfigured.

According to an advantageous embodiment of the invention which can be used in addition or alternatively to the above, processor of the mobile terminal is configured to detect interference conditions between uplink and/or downlink transmissions with the base station via the first resource and uplink and/or downlink transmissions with the wireless communication device via the second resource.

According to an advantageous embodiment of the invention which can be used in addition or alternatively to the above, the transmitting circuit of the mobile terminal is configured to report on the interference condition including transmitting an indication of the first resource to the base station.

According to an advantageous embodiment of the invention which can be used in addition or alternatively to the above, the transmitting circuit of the mobile terminal is configured to report on the interference condition including transmitting a radio resource control, RRC, message via an uplink distributed control channel, UL-DCCH, message to the base station.

According to an advantageous embodiment of the invention which can be used in addition or alternatively to the above, the transmitting circuit of the mobile terminal is configured to reports on an interference avoidance including transmitting another radio resource control, RRC, message via an uplink distributed control channel, UL-DCCH, message to the base station, wherein the other RRC message optionally includes an indication of the first resource for which the interference condition was detected.

According to an advantageous embodiment of the invention which can be used in addition or alternatively to the above, the transmitting circuit of the mobile terminal is configured to report on the interference resolution by including an indication on the interference resolution for communications via the first resource within: a further RRC message, a power headroom report, PHR, message, an extended power headroom report, e-PHR, message, a channel quality identifier, CQI, message, or a buffer status report, BSR, message to be transmitted by the mobile terminal to the base station.

According to an advantageous embodiment of the invention which can be used in addition or alternatively to the above, in case the transmitting circuit of the mobile terminal is configured to use a PHR/e-PHR message for reporting the interference resolution to the base station, a first value of a reserved bit (R-bit) of the PHR/e-PHR message indicates a resolved interference condition to the base station for communications via the first resource.

According to an advantageous embodiment of the invention which can be used in addition or alternatively to the above, in case the transmitting circuit of the mobile terminal is configured to use a PHR/e-PHR message for reporting the interference resolution to the base station, the transmission of the PHR/e-PHR message including the first value is triggered upon detection, by the processor of mobile terminal, that the interference condition has been resolved for communications via the first resource.

According to an advantageous embodiment of the invention which can be used in addition or alternatively to the above, in case the transmitting circuit of the mobile terminal is configured to use a PHR/e-PHR message for reporting the interference resolution to the base station, a second value of a reserved bit (R-bit) of the PHR/e-PHR message indicates a persisting interference condition for communications via the first resource, and the transmitting circuit of the mobile terminal is configured transmits PHR/e-PHR messages including the second value during a time period between the detection of the interference condition for communications with the base station via the first resource and the detection that the interference condition has been resolved for communications via the first resource.

According to an advantageous embodiment of the invention which can be used in addition or alternatively to the above, in case the transmitting circuit of the mobile terminal is configured to use an e-PHR message for reporting on the interference resolution to the base station, another reserved bit of the e-PHR message indicates the communication technology used for communicating with the wireless communication device via the second resource.

According to an advantageous embodiment of the invention which can be used in addition or alternatively to the above, in case the transmitting circuit of the mobile terminal is configured to use an e-PHR message for reporting on the interference resolution to the base station, at least one further reserved bit of the e-PHR message indicates the interference condition on a per-cell basis of the cells included in the first resource for which the interference condition has been detected.

The invention further provides for a computer readable medium storing instructions that, when executed by a processor of a mobile terminal, cause the mobile terminal to report on interference in a mobile communication system including a base station and a wireless communication device, the mobile terminal being in communication with the base station via a first resource and being configured for communication with the wireless communication device via a second resource, by detecting, by the mobile terminal, an interference condition between the communication with the base station via the first resource and a communication with the wireless communication device via the second resource; reporting on the interference condition to the base station; receiving reconfiguration information indicating a third resource for communication with the base station and reconfiguring the communication with the base station to the third resource; and detecting whether or not the interference condition persists for potential communications with the base station via the first resource, and, in case the interference condition has been resolved, reporting on an interference resolution to the base station for communications via the first resource.

The computer readable medium according to further embodiment of the invention is storing instructions that, when executed by a processor of a mobile terminal, cause the mobile terminal to perform the steps of the method for interference reporting by a mobile terminal in a mobile communication system according to one of the various exemplary embodiments described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an exemplary architecture of a 3GPP LTE system,
- **Fig. 2**: shows an exemplary overview of the overall E-UTRAN architecture of 3GPP LTE,

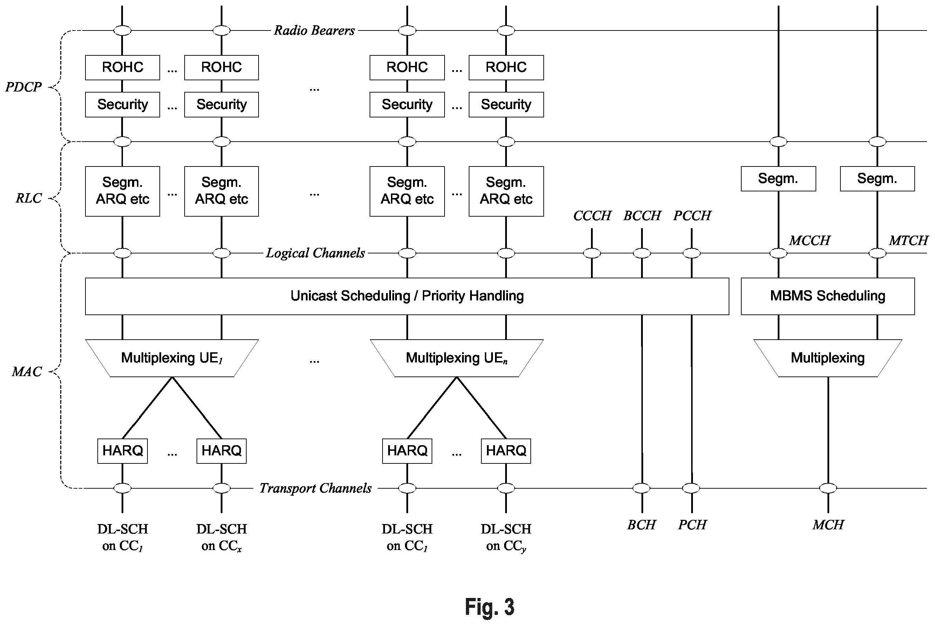

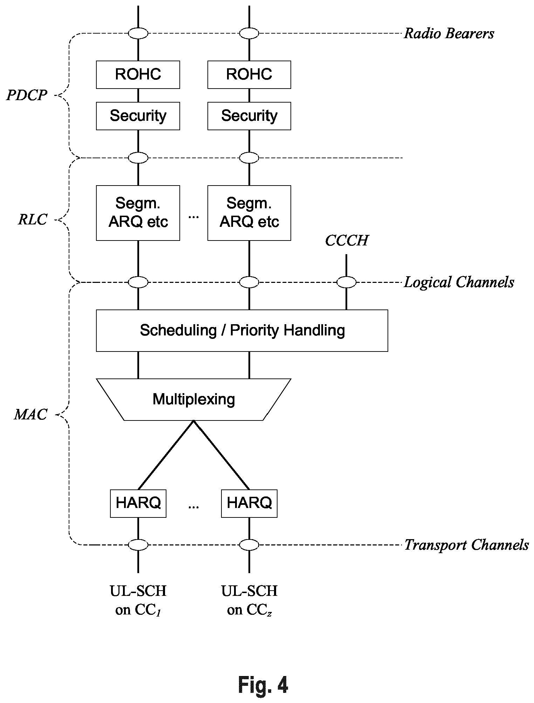

- **Figs. 3 & 4**: show the 3GPP LTE-A (Release 10) Layer 2 structure with activated carrier aggregation for the downlink and uplink, respectively,
- **Fig. 5**: illustrates a DRX operation of a mobile terminal and in particular the DRX opportunity, on-duration, according to the short and long DRX cycle,
- **Fig. 6**: shows examples of coexistence interference between coexisting transceivers of a user equipment,
- **Fig. 7**: exemplary illustrates coexistence interference between an in-device ISM transmitter and an E-UTRA receiver according to the prior art,
- **Fig. 8**: shows examples of co-location of 3GPP frequency bands and ISM frequency bands, and the usage thereof for specific communication technologies,
- **Fig. 9**: illustrates UE signaling for in-device coexistence according to the prior art,
- **Fig. 10**: shows problems of the UE signaling for coexisting interference reporting in an exemplary scenario according to the prior art,
- **Fig. 11**: shows a sequence diagram of an improved interference reporting mechanism of a user equipment according to one embodiment of the invention,
- **Figs. 12 & 13**: illustrates exemplary interference resolution messages for reporting by the user equipment that the interference condition has been resolved to the base station according to variations of the first embodiment of the invention,
- **Fig. 14**: shows a sequence diagram of an improved interference reporting mechanism of the user equipment according to a second embodiment of the invention,
- **Fig. 15**: illustrates an implementation of the improved interference reporting mechanism between the user equipment and the base station according to the second embodiment of the invention,
- **Fig. 16**: illustrates another implementation of the improved interference reporting mechanism between the user equipment and the base station according to the second embodiment of the invention,
- **Figs. 17 & 18**: illustrates exemplary interference resolution messages for reporting by the user equipment that the interference condition has been resolved to the base station according to variations of the embodiments of the invention, and
- **Fig. 19**: illustrates an implementation of the improved interference reporting mechanism between the user equipment and the base station according to the first embodiment of the invention.

### DETAILED DESCRIPTION OF THE INVENTION

The following paragraphs will describe various embodiments of the invention. For exemplary purposes only, most of the embodiments are outlined in relation to a radio access scheme according to 3GPP LTE (Release 8/9) and LTE-A (Release 10/11) mobile communication systems, partly discussed in the Technical Background section above. It should be noted that the invention may be advantageously used for example in a mobile communication system such as 3GPP LTE-A (Release 10/11) communication systems as described in the Technical Background section above, but the invention is not limited to its use in this particular exemplary communication networks.

One aspect of the invention is to suggest an improvement to the interference reporting by the user equipment (UE). Information on interference, namely coexistence interference, is reported by the UE to the base station in order to enable the base station to reconfigure the UE so as to avoid interference conditions in the future.

In the improvement to the interference reporting, the UE additionally informs the base station on situations according to which the interference condition, for which coexistence interference was previously reported, has been resolved. In particular, the UE continues detecting whether or not the interference condition persists for potential communications with the base station via a first resource even after reconfiguration of the communications with the base station to a different (i.e. third) resource.

As will be outlined below, the reporting, by the user equipment, on situations according to which the interference condition has been resolved enables the base station to reconsider a configuration of the user equipment to the previously used, (i.e. first) resource for communication with the base station. Additionally, the reporting, by the user equipment, advantageously provides the base station with sufficient information for it to avoid potential IDC problems after reception of an indication of an IDC problem.

In the context of the invention, the term "resource" refers to the availability of a physical resource for the UE to communicate with the base station or coexistent wireless communication device. In more detail, a "resource" specifies a time-frequency resource which is allocated to the UE for communication.

Referring now to Fig. 11 an improved interference reporting mechanism according to a first embodiment of the invention will be explained in more detail. Specifically, Fig. 11 shows a sequence diagram of the improved interference reporting mechanism to be performed by the user equipment according to the first embodiment of the invention.

Assuming the user equipment to be in a mobile communication system including a base station and a coexistent wireless communication device, the user equipment is in communication with the base station via a first resource and is also configured for communication with the coexistent wireless communication device via a second resource.

For the improved interference reporting mechanism according to the first embodiment, the user equipment first detects (step S1) whether or not there is an interference condition (also termed: in-device coexistence problem *P^{IDC}*) between the communication with the base station via the first resource and a communication with the coexistent wireless communication device via the second resource. If the user equipment detects the interference condition, it proceeds with reporting on the interference condition to the base station (step S2), otherwise it continues detecting an interference condition.

As can be readily appreciated, there are various implementations allowing the user equipment to detect an interference condition between the communication with a base station via the first resource and a communication with the coexistent wireless communication device via a second resource. Firstly, an UE internal coordination between coexistent transceivers can provide an indication on the interference condition between a communication with the base station via the first resource and a communication with the coexistent wireless communication device via the second resource. Secondly, channel measurements can provide the user equipment with an indication on the interference condition. Various other implementations are also possible.

Upon detection of an interference condition, the user equipment reports (step S2) the interference condition to the base station by transmitting a message to the bases station indicating at least the existence of the interference condition (also termed: in-device coexistence problem *P^{IDC}*). The transmission of the message by the user equipment is indicated as *M*(*P^{IPC}*)*.* Optionally, in case of detection of a persisting interference condition via the first resource, the user equipment may also transmit a message to the base station indicating the continued existence of the interference condition, indicated as *M*(*P^{IPC}cont.*).

Having transmitted a message to the bases station indicating at least the existence of the interference condition, the user equipment proceeds waiting for a reception of reconfiguration information (step S3a) for reconfiguration of the communication with the base station to a third resource. With the reconfiguration information, the base station may reconfigure the user equipment in order to avoid an interference condition with a communication with the coexistent wireless communication device via the second resource.

If the user equipment receives reconfiguration information indicating a third resource for communication with the base station, it proceeds with reconfiguring (step S3c) the communication with the base station to the indicated third resource. Should the user equipment not receive reconfiguration information for communication with the base station, it may determine whether or not a time has expired (step S3b), upon expiration of which the user equipment may proceed to repeat detection of whether or not there still is the interference condition (step S1).

After reconfiguration of the communication with the base station to the indicated third resource, the user equipment detects (step S5a) whether or not the interference condition persists for potential communication with the base station via the first resource. In other words, the user equipment detects whether or not the previously detected interference condition has been resolved.

If the user equipment detects that the previously reported interference condition has been resolved, the user equipment reports on an interference resolution to the base station by transmitting (step S5b) an indication that the previously reported interference condition has been resolved, indicated as *M*(*resP^{IPC}*)*.* If the user equipment detects that the previously reported condition has not been resolved, it repeats the detection step (step S5a).

In general, there are various implementations for the user equipment to report on an interference resolution to the base station, exemplary, by defining new control message for carrying an indication that the interference condition has resolved.

In particular, the indication on an interference resolution may be transmitted as a RRC message via the uplink distributed control channel UL-DCCH, a channel state information (CSI) message, a buffer status reporting (BSR) or a power headroom reporting (PHR).

However, for conveying the indication on an interference resolution as RRC signaling, a new MAC-CE would need to be defined. Similarly, when transmitting the indication on a interference resolution as a channel state information (CSI) message, a new codepoint would be required. Same also applies for buffer status reporting (BSR), which cannot convey the indication on an interference resolution without changes to the signaling messages. Yet, a new control message increases the signaling overhead between the user equipment and the base station.

Alternatively, the user equipment may convey the indication on an interference resolution as a HARQ process reservation bitmap where all 8 HARQ processes are indicated as not reserved. This bitmap can be transmitted via a RRC message.

Specifically, there are 8 HARQ processes which are respectively associated with different resources. By the user equipment transmitting to the base station assisting information including a bit-map (8 Bits for the 8 HARQ processes) the user equipment can indicate HARQ processes to be used at the base station.

Accordingly, the indication of an interference condition *M*(*P^{IPC}* )may be reported by the user equipment to the base station as a HARQ Process reservation bitmap where some of the 8 HARQ processes are indicated as reserved, and thus, a HARQ Process Reservation bitmap where all 8 HARQ processes are indicated as not reserved corresponds to the indication on an interference resolution to the base station *M*(*resP^{IPC}*)*.*

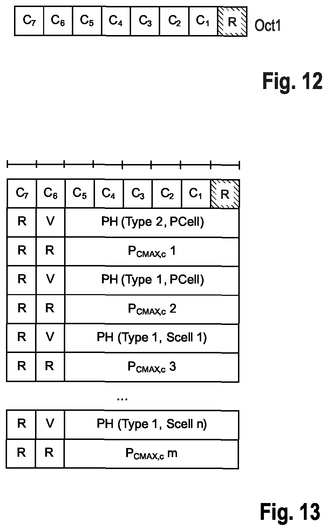

In a different, advantageous implementation of the first embodiment, the improved interference reporting mechanism re-uses periodic uplink signaling between the user equipment and the base station for additionally carrying an indication on whether or not the interference condition has resolved. In other words, the indication of whether or not the interference condition has resolved is included by the user equipment in an existing control message to be transmitted to the base station. This advantageous implementation will be explained with respect to Figs. 12 and 13.

Referring now to Figs. 12 and 13, exemplary implementations of the interference resolution message for reporting by the user equipment that the interference condition has been resolved to the base station according to the first embodiment are shown.

Specifically, Fig. 12 illustrates a power headroom report (PHR) message which can be exemplary utilized for reporting by the user equipment on a resolution of the interference condition to the base station. Alternatively, as shown in Fig. 13, an extended power headroom report (e-PHR) message can be utilized for reporting by the user equipment for reporting on a resolution of the interference condition to the base station.

Advantageously, by utilizing either a PHR message or a e-PHR message for reporting by the user equipment on a resolution of the interference condition to the base station, these implementations of the first embodiment of the invention allow for reporting without an increase of signaling overhead, as will become apparent from the following. In other words, by re-use of the PHR/e-PHR message the improved interference reporting mechanism avoids introduction of additional signaling overhead.

Specifically, in both MAC control elements (CE) which are used to report the power headroom, the PHR MAC CE, and the e-PHR MAC CE, the included reserved bits can be re-used to indicate the interference resolution by the user equipment to the base station.

In more detail, one of the two reserved bits of the PHR MAC CE shown in Fig 12 can be used to carry the information indicating the interference resolution by the user equipment to the base station. Exemplary, the rightmost reserved bit of the PHR MAC CE (i.e. hatched R-Bit) is defined to carry the information.

Alternatively, in the ePHR MAC CE shown in Fig. 13 the reserved bit in the first octet (i.e. hatched R-Bit) and the reserved bits in the P_{CMAX,c} octets can be used carry the information indicate the interference resolution by the user equipment to the base station. The usage of the reserved bit in the first octet is preferable since a variable number of the P_{CMAX,c} octets in the ePHR MAC CE would render the retrieval of the included information more complex as it would additionally require definition of the specific octet to be used for carrying the information.

The above information for reporting on the resolution of the interference condition can be included in the reserved bits of the PHR and e-PHR MAC CEs as show in Figures 12 and 13, by defining the information states as follows:
- State 1 (i.e. bit set to 1): interference condition has not been resolved (e.g. ISM is active)
- State 2 (i.e. bit set to 0): interference condition has been resolved (e.g. ISM is non-active or ISM is non-interfering).

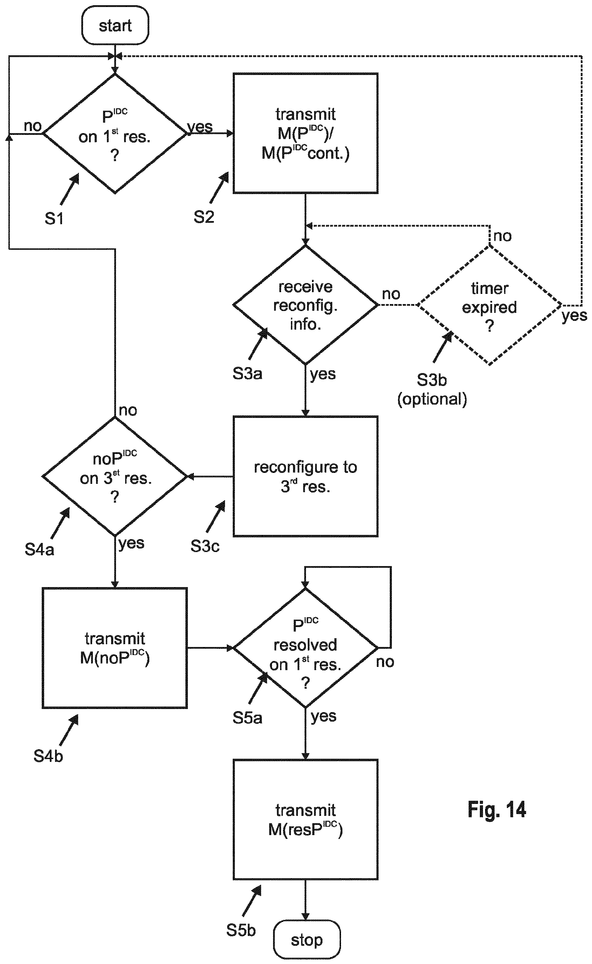

Referring now to Fig. 14 an improved interference reporting mechanism according to a second embodiment of the invention will be explained in more detail. Specifically, Fig. 14 shows a sequence diagram of an improved interference reporting mechanism to be performed by the user equipment according to the second embodiment of the invention.

The improved interference reporting mechanism according to the second embodiment illustrated in Fig. 14 is based on that of the first embodiment illustrated in Fig. 11 where corresponding parts are given corresponding reference numerals and terms. The detailed description of corresponding parts has been omitted for reasons of conciseness.

Specifically, the improved interference reporting mechanism according to the second embodiment also includes a detecting (step S1) by the mobile terminal an interference condition between the communication with the base station via the first resource and a communication with the coexistent wireless communication device via the second resource. Upon detection of the interference condition, the user equipment of the second embodiment also includes reporting (step S2) on the interference condition.

If the user equipment of the second embodiment, after reporting on the interference condition, receives (step S3a) reconfiguration information indicating a third resource and reconfigures (step S3c) the communication with the base station to the third resource, the user equipment proceeds to detect (step S4a) whether or not there is an interference condition between the reconfigured communication with the base station via the third resource and the communication with the coexistent wireless communication device via the second resource.

In case there is no interference condition between the reconfigured communication with the base station via the third resource and the communication with the coexistent wireless communication device via the second resource, the user equipment proceeds to report (step S4b) on an interference avoidance due to reconfiguration to the base station, namely by transmitting an indication that there is no interference condition between the reconfigured communication with the base station via the third resource and the communication with the coexistent wireless communication device via the second resource, indicated as *M*(*noP^{IPC}*)*.*

In case there is interference, i.e. an interference condition is detected for communications with the base station via the third resource and the communication with the coexistent wireless communication device via the second resource, the user equipment proceeds with the detection of an interference condition of step S1 where the first resource is substituted with the third resource.

After transmission of the indication that there is no interference for the reconfigured communication with the base station, the user equipment detects (step S5a) whether or not the interference condition persists for potential communication with the base station via the first resource. In other words, the user equipment detects whether or not the previously detected interference condition has been resolved.

If the user equipment detects that the previously reported interference condition has been resolved, the user equipment reports on an interference resolution to the base station by transmitting (step S5b) an indication that the previously reported interference condition has been resolved, indicated as *M*(*resP^{IPC}*)*.* If the user equipment detects that the previously reported condition has not been resolved, it repeats the detection step (step S5a).

Also in this second embodiment, the indication on an interference resolution may be transmitted as a RRC message via the uplink distributed control channel UL-DCCH, a channel state information (CSI) message, a buffer status reporting (BSR) or a power headroom reporting (PHR).

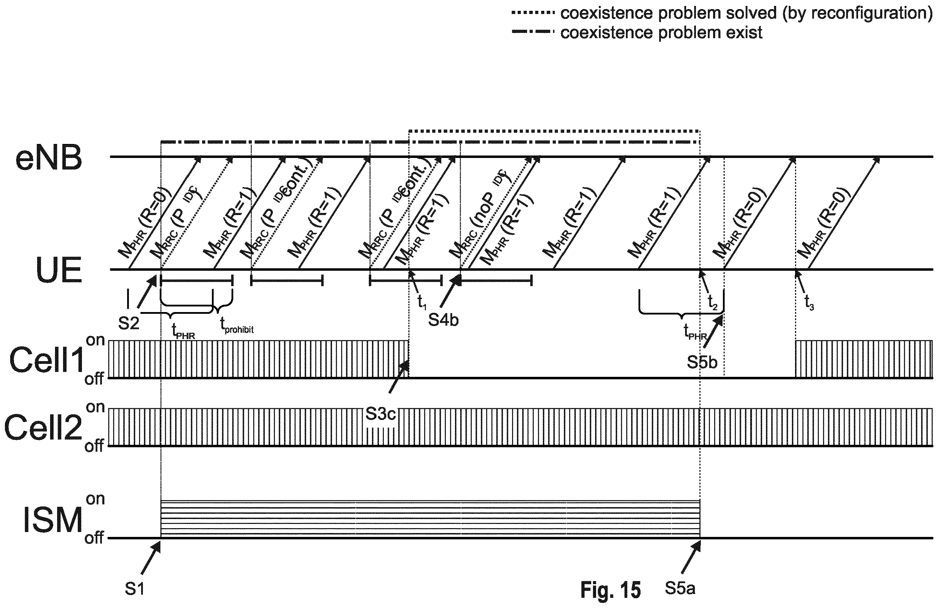

Referring now to Fig. 15 an implementation of the improved interference reporting mechanism according to the second embodiment of the invention will be explained in more detail. Specifically, Fig. 15 illustrates the UE signaling of an implementation the improved interference reporting mechanism to be performed by the user equipment according to the second embodiment of the invention.

This implementation of the improved interference reporting mechanism uses PHR/e-PHR messages (PHR/e-PHR MAC CEs) for reporting on the interference resolution to the base station. In other words, during a time period where an interference condition has not been resolved (i.e. where coexistence interference is still possible between a communications with the base station via the first resource and a communication with coexistent wireless communication device via the second resource), the user equipment transmits PHR/e-PHR messages including a second value for a predefined reserved bit, R=1, whereas after the interference condition has been resolved, the user equipment transmits at least one PHR/e-PHR message including a first value for the predefined reserved bit, R=0.

As already explained with respect to the background section, when the user equipment detects (step S1) that there is an interference condition (also termed: in-device coexistence problem *P^{IDC}*) between the communication with the base station via the first resource and a communication with the coexistent wireless communication device via the second resource, the user equipment proceeds with reporting (step S2) on the interference condition to the base station. In this implementation the reporting is performed by transmitting a RRC message via the uplink distributed control channel, UL-DCCH (illustrated as *M_{RRC}*(*P^{IPC}*)).

Additionally to reporting on the interference condition, the user equipment starts transmitting PHR/e-PHR messages including the second value for a predefined reserved bit, R=1, indicating to the base station that the interference condition has not been resolved (i.e. that coexistence interference is still possible between a communications with the base station via the first resource and a communication with coexistent wireless communication device via the second resource).

In other words, the indication that the interference condition has not been resolved enables the base station to determine that the cause for the detection of the interference condition, namely the communication by the user equipment with the coexistent wireless communication device via the second resource has neither been stopped nor been reconfigured to a different, fourth resource.

Further, the user equipment includes a prohibit timer *Δt_{prohibit}* preventing from transmitting RRC message, for instance a RRC message indicating the interference condition, too frequently. In other words, in case the user equipment does not receive reconfiguration information indicating a different resource for the communication with the base station and in case the prohibit timer has elapsed, the user equipment may proceed with repeating the detection of whether or not there is still the interference condition for the configured first resource. Then, in case the interference condition persists, the user equipment may transmit a message to the base station indicating the continued existence of the interference condition, indicated as *M*(*P^{IPC}cont.*)*.*

After reception by the user equipment of reconfiguration information indicating a different resource for communication with the base station, the user equipment reconfigures at time *t*₁ the communication with the base station to the indicated different resource. In the implementation of the second embodiment, the first resource corresponds to communications via Cell1 and Cell2 and the third resource corresponds to communications via Cell2 only. Accordingly, after reception by the user equipment of reconfiguration information indicating Cell2 only, the user equipment accordingly reconfigures (step S3c) the communication with the base station and keeps Cell1 deactivated (e.g. in an off state).

Having reconfigured the communication with the base station to the third resource (i.e. Cell2 only), the user equipment detects (step S4a) whether or not there is an interference condition between the reconfigured communication with the base station via the third resource and the communication with the coexistent wireless communication device via the second resource and reports (step S4b) on an interference avoidance in case there is no interference condition by transmitting an RRC message including the interference avoidance information, indicated as *M_{RRC}*(*noP^{IPC}*)*.*

Since the prohibit timer *Δt_{prohibit}* prevents the user equipment from transmitting RRC messages too frequently, the transmission of the RRC message including the interference avoidance information, indicated as *M_{RRC}*(*noP^{IPC}*)*,* may be delayed with respect to the time *t*₁ of reconfiguration of the communication with the base station to the indicated different resource.

Further, the user equipment proceeds with detecting (step S5a) whether or not the interference condition persists for potential communication with the base station via the first resource until at time *t*₂, the user equipment detects that the interference condition has resolved. The user equipment intends thereafter to report on the interference resolution by transmitting a PHR/e-PHR message including a first value for the predefined reserved bit, R=0.

Accordingly, the user equipment transmits PHR/e-PHR messages including the second value for the predefined reserved bit, R=1, during a time period between the detection (step S1) of the interference condition for communications with the base station via the first resource and the detection (step S5a) that the interference condition has been resolved for communications via the first resource.

Yet, since the reporting on the interference resolution to the base station is performed by the user equipment transmitting PHR/e-PHR messages, the user equipment cannot immediately report to the base station that the interference condition has been resolved by transmitting a PHR/e-PHR message including a first value for the predefined reserved bit, R=0.

Moreover, the transmissions of PHR/e-PHR messages by the user equipment are periodically triggered corresponding to time period *Δt_{PHR}.* Accordingly, the reporting by the user equipment that the interference condition has been resolved is delayed with respect to time *t*₂, namely until a subsequent transmission of a PHR/e-PHR message is triggered corresponding to time period *Δt_{PHR}.* Then, when the subsequent transmission of a PHR/e-PHR message corresponding to time period *Δt_{PHR}* after time *t*₂*,* the user equipment transmits (step S5b) a PHR/e-PHR message including a first value for the predefined reserved bit, R=0, for indicating that the interference condition has been resolved, indicated as *M*(*resP^{IPC}*)*.*

Upon reception by the base station of the PHR/e-PHR message including a first value for the predefined reserved bit, R=0, the base station may reconfigure the communication of the user equipment with it to the first resource, corresponding to corresponds to communications via Cell1 and Cell2.

In other words, taking into account the periodic indication via the PHR reporting of whether or not the interference condition has been resolve, the base station is provided with sufficient information for it to avoid potential IDC problems after reception of an indication of an IDC problem.

Specifically, after the user equipment indicates that the IDC problem is avoided by transmission of the RRC message including the interference avoidance information, indicated as *M_{RRC}*(*noP^{IPC}*)*,* the base station can determine base on the PHR reporting, whether an interfering transmission via the second resource, causing the coexistence interference termed IDC problem is still ongoing and also determine the point in time, where an interfering transmission via the second resource is not active anymore.

If the interfering transmission via the second resource is still active after reporting on the interference avoidance in step S4b, the base station knows that the configuration to the third resource of the user equipment needs to be maintained where Cell1 is kept deactivated. Once base station receives the information that transmission via the second resource has stopped or is reconfigured, it knows that user equipment can be reconfigured to it's previous configuration transmission via the second resource via the first resource, namely Cell1 can be reactivate.

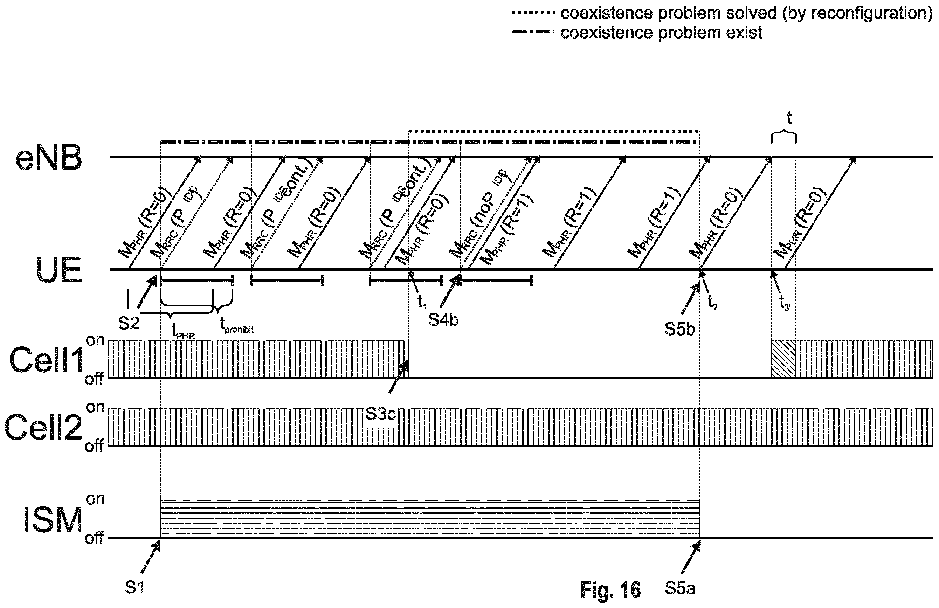

Referring now to Fig. 16 a variation of the implementation of the improved interference reporting mechanism according to the second embodiment of the invention will be explained in more detail. Specifically, Fig. 16 illustrates the UE signaling of the varied implementation the improved interference reporting mechanism to be performed by the user equipment according to the second embodiment of the invention.

The varied implementation of the improved interference reporting mechanism according to the second embodiment illustrated in Fig. 16 is based on the implementation illustrated in Fig. 15 where corresponding parts are given corresponding reference numerals and terms. The detailed description of corresponding parts has been omitted for reasons of conciseness.

The varied implementation illustrated in Fig. 16 differs from that in Fig. 15 in that the user equipment may trigger transmission of an additional PHR/e-PHR message for conveying the indication that the interference condition has resolved more quickly to the base station.

Specifically, the user equipment is configured such that the detection of the interference resolution in step S5a is an additional trigger for PHR. This has the effect that PHR is sent at the next UL transmission rather than waiting for the next periodic triggering corresponding to time period *Δt_{PHR}.* Depending on the time between the detection by the user equipment at time *t*₂ of the interference resolution in step S5a and the next periodic triggering event, the PHR report indicating that the interference condition has been resolved will arrive several sub-frames earlier (in an exemplary configuration with a periodic PHR trigger set to 200ms this can be up to 200 sub-frames). Hence, base station can reconfigure the user equipment to its previous configuration of communicating via the first resource at an earlier point in time in order to increase the user equipment's throughput.

Further, the varied implementation illustrated in Fig. 16 differs from that in Fig. 15, in that the user equipment only transmits PHR/e-PHR messages including the second value for the predefined reserved bit, R=1, during a time period between the detection (step S4a) that the interference condition has been avoided by reconfiguration and the detection (step S5a) that the interference condition has been resolved for communications via the first resource.

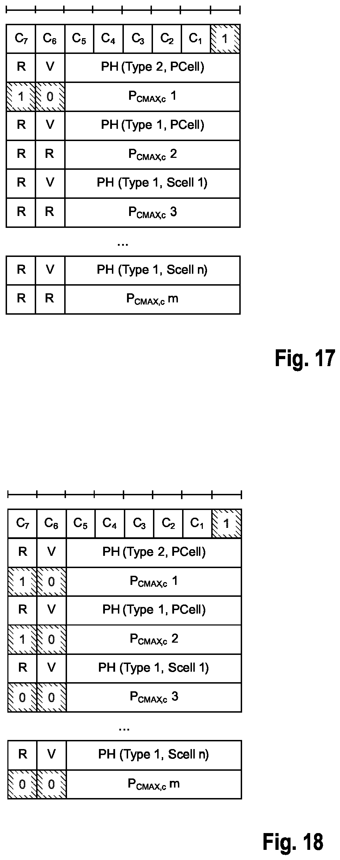

Referring now to Figs. 17 and 18, varying implementations of the interference resolution message for reporting by the user equipment that the interference condition has been resolved to the base station according to the second embodiment are shown.

Specifically, Fig. 17 illustrates an e-PHR message indicating that a, by the user equipment detected, interference condition has not been resolved (including the second value for the predefined reserved bit, R=1) together with an indication of the communication technology used by a communication with the coexistent wireless communication device.

As shown in Fig. 17, the e-PHR message to be transmitted by the user equipment includes a second value for the predefined first reserved bit, R=1, for indicating that the interference condition has not been resolved (i.e. where coexistence interference is still possible between a communications with the base station via the first resource and a communication with coexistent wireless communication device via the second resource). Additionally, the e-PHR message includes at least one other reserved bit indicating the communication technology used for communicating with the coexistent wireless communication device via the second resource.

Exemplary, the at least one other reserved bit for indicating the communication technology includes the first and second reserved bits in first P_cmax_c octet of e-PHR MAC CE, where
- first/ higher bit indicates Wifi communication technology,
- second/lower bit indicates Bluetooth communication technology, and

where the value "1" of respective the reserved bit indicates a non-resolved interference condition and the value "0" indicates a resolved interference condition.

Further, Fig. 18 illustrates an e-PHR message indicating that a, by the user equipment detected, interference condition has not been resolved (including the second value for the predefined reserved bit, R=1) together with an indication of the interference condition on a per-cell basis of the cells included in the first resource for which the interference condition has been detected.

Considering an exemplary configuration of the user equipment where the communication with the base station is performed via the first resource which corresponds to communications via a plurality of different cells, e.g. Cell1 and Cell2. By re-using the reserved bits of the e-PHR message in each P_cmax_c octet, namely where the octets indicate respective cells of the first resource, the user equipment can indicate the resolution/non-resolution of the interference condition on a per-cell basis.

Specifically, reserved bits in each P_cmax_c octet of ePHR MAC CE indicate an interference type per cell. Thus, all cells (with UL transmission) that are affected by the detected interference condition are indicated.

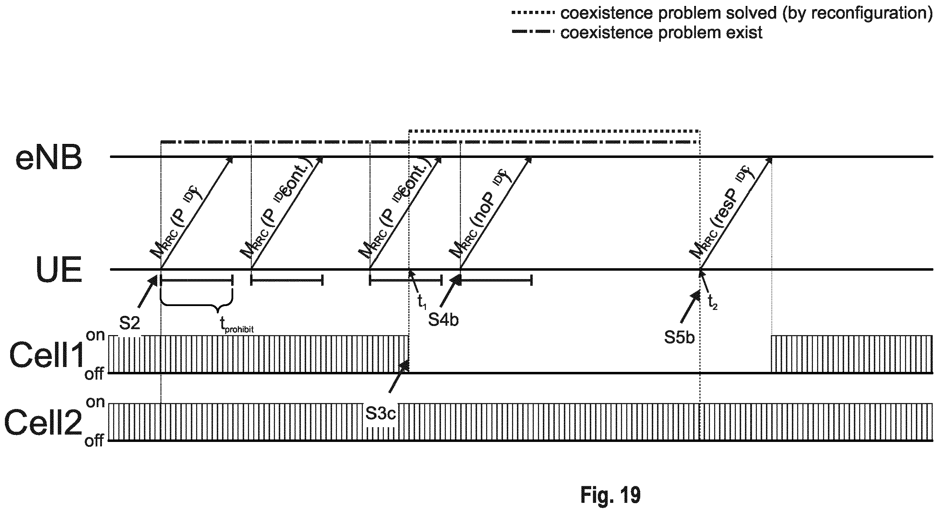

Referring now to Fig. 19, an implementation of the improved interference reporting mechanism according to the first embodiment of the invention will be explained in more detail. Specifically, Fig. 19 illustrates the UE signaling of the implementation the improved interference reporting procedure to be performed by the user equipment according to the first embodiment of the invention.

As explained already with respect to Fig. 11, if a user equipment according to the first embodiment of the invention detects that the previously reported interference condition has been resolved, the user equipment reports on an interference resolution to the base station by transmitting (step S5b) an indication that the previously reported interference condition has been resolved, indicated as *M*(*resP^{IPC}*)*.*

In the particular implementation illustrated in Fig. 19, the indication on an interference resolution is transmitted by the user equipment to the bases station as a RRC message including an indication of the previously reported interference condition (i.e. the same information of *M_{RRC}*(*P^{IPC}*)) and additional information indicating that the previously reported interference condition has been resolved. The RRC message is also transmitted by the user equipment via the uplink distributed control channel UL-DCCH to the base station.

Also in this implementation, the base station is provided with sufficient information for it to avoid potential IDC problems after reception of an indication of an IDC problem.

### Hardware and Software Implementation of the Invention

Another embodiment of the invention relates to the implementation of the above described various embodiments using hardware and software. In this connection the invention provides a user equipment (mobile terminal) and a eNodeB (base station). The user equipment is adapted to perform the methods described herein. Furthermore, the eNodeB comprises means that provide the eNodeB with sufficient information for it to avoid potential IDC problems after reception of an indication of an IDC problem.

It is further recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the scope of the invention as broadly described, which is given by the claims. The present embodiments are, therefore, to be considered in all respects to be illustrative and not restrictive.

## Claims

1. A method for interference reporting by a mobile terminal in a mobile communication system including a base station and a wireless communication device, the mobile terminal being in communication with the base station via a first resource and being configured for communication with the wireless communication device via a second resource, the method comprising the steps of:
detecting (S1), by the mobile terminal, an interference condition between the communication with the base station via the first resource and a communication with the wireless communication device via the second resource;
reporting (S2), by the mobile terminal, on the interference condition to the base station;
receiving (S3a), by the mobile terminal, reconfiguration information indicating a third resource for communication with the base station and reconfiguring (S3c) the communication with the base station to the third resource; and
detecting (S5a), by the mobile terminal, whether or not the interference condition persists for potential communications with the base station via the first resource, and, in case the interference condition has been resolved, reporting (S5b), by the mobile terminal, on an interference resolution to the base station for communications via the first resource.

2. The method according to claim 1, wherein the step of detecting whether or not the interference condition persists for potential communications with the base station via the first resource is performed by the mobile terminal after a step of:
reporting (S4b), by the mobile terminal, on an interference avoidance to the base station, in case there is no interference condition (S4a) between the reconfigured communication with the base station via the third resource and the communication with the wireless communication device via the second resource.

3. The method according to one of claims 1 to 2, wherein the step of detecting (S5a) whether or not the interference condition persists for potential communications with the base station via the first resource is repeatedly performed until detection that the interference condition has been resolved.

4. The method according to one of claims 1 to 3, wherein the step of detecting (S5a) whether or not the interference condition persists for potential communications with the base station via the first resource includes determining by the mobile terminal:
- if the communication with the wireless communication device via the second resource has been terminated, and/or
- if the communication with the wireless communication device has been reconfigured.

5. The method according to one of claims 1 to 4, wherein the step of detecting (S1), by the mobile terminal, the interference condition includes detecting interference conditions between uplink and/or downlink transmissions with the base station via the first resource and uplink and/or downlink transmissions with the wireless communication device via the second resource.

6. The method according to one of claims 1 to 5, wherein the step of reporting (S2), by the mobile terminal, on the interference condition includes transmitting an indication of the first resource to the base station.

7. The method according to one of claims 1 to 6, wherein the step of reporting (S2), by the mobile terminal, on the interference condition includes transmitting a radio resource control, RRC, message via an uplink distributed control channel, UL-DCCH, message to the base station.

8. The method according to one of claims 2 to 7, wherein the step of reporting (S4b), by the mobile terminal, on an interference avoidance includes transmitting another radio resource control, RRC, message via an uplink distributed control channel, UL-DCCH, message to the base station, wherein the other RRC message optionally includes an indication of the first resource for which the interference condition was detected.

9. The method according to one of claims 1 to 8, wherein the step of reporting (S5b) on the interference resolution is performed by the mobile terminal including an indication on the interference resolution for communications via the first resource within:
- a further RRC message,
- a power headroom report, PHR, message,
- an extended power headroom report, e-PHR, message,
- a channel quality identifier, CQI, message, or
- a buffer status report, BSR, message,
to be transmitted by the mobile terminal to the base station.

10. The method according to claim 9, wherein, in case a PHR/e-PHR message is used by the mobile terminal for reporting the interference resolution to the base station,
a first value of a reserved bit (R-bit) of the PHR/e-PHR message indicates a resolved interference condition to the base station for communications via the first resource, and wherein optionally,
the transmission of the PHR/e-PHR message including the first value is triggered upon detection, by the mobile terminal, that the interference condition has been resolved for communications via the first resource.

11. The method according to claim 10, wherein, in case a PHR/e-PHR message is used by the mobile terminal for reporting on the interference resolution to the base station,
a second value of a reserved bit (R-bit) of the PHR/e-PHR message indicates a persisting interference condition for communications via the first resource, and
PHR/e-PHR messages including the second value are to be transmitted by the mobile terminal during a time period between the detection of the interference condition for communications with the base station via the first resource and the detection that the interference condition has been resolved for communications via the first resource.

12. The method according to one of claims 9 to 11, wherein, in case an e-PHR message is used by the mobile terminal for reporting on the interference resolution to the base station, another reserved bit of the e-PHR message indicates the communication technology used for communicating with the wireless communication device via the second resource and/or at least one further reserved bit of the e-PHR message indicates the interference condition on a per-cell basis of the cells included in the first resource for which the interference condition has been detected.

13. A mobile terminal for interference reporting in a mobile communication system including a base station and a wireless communication device, the mobile terminal being in communication with the base station via a first resource and being configured for communication with the wireless communication device via a second resource, the mobile terminal comprising:
a processor configured to detect an interference condition between the communication with the base station via the first resource and a communication with the wireless communication device via the second resource;
a transmitting circuit configured to report on the interference condition to the base station;
a receiving circuit configured to receive reconfiguration information indicating a third resource for communication with the base station, the processor being configured to reconfigure the communication with the base station to the third resource; and wherein
the processor is further configured to detect whether or not the interference condition persists for potential communications with the base station via the first resource, and, in case the interference condition has been resolved, the transmitting circuit is configured to report on an interference resolution to the base station for communications via the first resource.

14. The mobile terminal according to claim 13, wherein the transmitting circuit is further configured to report on an interference avoidance to the base station, in case there is no interference condition between the reconfigured communication with the base station via the third resource and the communication with the wireless communication device via the second resource, and the processor is configured to detect whether or not the interference condition persists for potential communications with the base station via the first resource after the transmitting circuit reports on the interference avoidance to the base station.

15. A computer readable medium storing instructions that, when executed by a processor of a mobile terminal, cause the mobile terminal to report on interference in a mobile communication system including a base station and a wireless communication device, the mobile terminal being in communication with the base station via a first resource and being configured for communication with the wireless communication device via a second resource, by:
detecting, by the mobile terminal, an interference condition between the communication with the base station via the first resource and a communication with the wireless communication device via the second resource;
reporting on the interference condition to the base station;
receiving reconfiguration information indicating a third resource for communication with the base station and reconfiguring the communication with the base station to the third resource; and
detecting whether or not the interference condition persists for potential communications with the base station via the first resource, and, in case the interference condition has been resolved, reporting on an interference resolution to the base station for communications via the first resource.

## Patentansprüche

1. Verfahren zum Interferenzmelden durch ein mobiles Endgerät in einem Mobilkommunikationssystem umfassend eine Basisstation und eine Drahtlos-Kommunikationsvorrichtung, wobei das mobile Endgerät in Kommunikation mit der Basisstation über eine erste Ressource steht und zur Kommunikation mit der Drahtlos-Kommunikationsvorrichtung über eine zweite Ressource ausgebildet ist, wobei das Verfahren die Schritte umfasst zum:
Erfassen (S1) eines Interferenzzustands zwischen der Kommunikation mit der Basisstation über die erste Ressource und einer Kommunikation mit der Drahtlos-Kommunikationsvorrichtung über die zweite Ressource durch das mobile Endgerät;
Melden (S2) durch das mobile Endgerät zum Interferenzzustand an die Basisstation;
Empfangen (S3a) einer eine dritte Ressource zur Kommunikation mit der Basisstation angebenden Umkonfigurationsinformation durch das mobile Endgerät und Umkonfigurieren (S3c) der Kommunikation mit der Basisstation an die dritte Ressource; und
Erfassen (S5a) durch das mobile Endgerät, ob der Interferenzzustand für potentielle Kommunikationen mit der Basisstation über die erste Ressource anhält oder nicht, und, wenn der Interferenzzustand behoben wurde, Melden (S5b) durch das mobile Endgerät zu einer Interferenzbehebung an die Basisstation für Kommunikationen über die erste Ressource.

2. Verfahren nach Anspruch 1, wobei der Schritt zum Erfassen, ob der Interferenzzustand für potentielle Kommunikationen mit der Basisstation über die erste Ressource anhält oder nicht, durch das mobile Endgerät durchgeführt wird nach einem Schritt zum:
Melden (S4b) vom mobilen Endgerät zu einer Interferenzvermeidung an die Basisstation, wenn kein Interferenzzustand (S4a) zwischen der umkonfigurierten Kommunikation mit der Basisstation über die dritte Ressource und der Kommunikation mit der Drahtlos-Kommunikationsvorrichtung über die zweite Ressource besteht.

3. Verfahren nach Anspruch 1 bis 2, wobei der Schritt zum Erfassen (S5a), ob der Interferenzzustand für potentielle Kommunikationen mit der Basisstation über die erste Ressource anhält oder nicht, wiederholt bis zum Erfassen durchgeführt wird, dass der Interferenzzustand behoben wurde.

4. Verfahren nach einem der Ansprüche 1 bis 3, wobei der Schritt zum Erfassen (S5a), ob der Interferenzzustand für potentielle Kommunikationen mit der Basisstation über die erste Ressource anhält oder nicht, das Bestimmen durch das mobile Endgerät umfasst:
- ob die Kommunikation mit der Drahtlos-Kommunikationsvorrichtung über die zweite Ressource beendet wurde, und/oder
- ob die Kommunikation mit der Drahtlos-Kommunikationsvorrichtung umkonfiguriert wurde.

5. Verfahren nach einem der Ansprüche 1 bis 4, wobei der Schritt zum Erfassen (S1) des Interferenzzustands durch das mobile Endgerät das Erfassen von Interferenzzuständen zwischen Uplink- und/oder Downlink-Sendungen mit der Basisstation über die erste Ressource und Uplink- und/oder Downlink-Sendungen mit der Drahtlos-Kommunikationsvorrichtung über die zweite Ressource umfasst.

6. Verfahren nach einem der Ansprüche 1 bis 5, wobei der Schritt zum Melden (S2) durch das mobile Endgerät zum Interferenzzustand das Senden einer Angabe der ersten Ressource an die Basisstation umfasst.

7. Verfahren nach einem der Ansprüche 1 bis 6, wobei der Schritt zum Melden (S2) durch das mobile Endgerät zum Interferenzzustand das Senden einer Radio-Resource-Control-(RRC-)Nachricht über eine Uplink-Distributed-Control-Channel-(UL-DCCH-)Nachricht an die Basisstation umfasst.

8. Verfahren nach einem der Ansprüche 2 bis 7, wobei der Schritt zum Melden (S4b) durch das mobile Endgerät zu einem Interferenzzustand das Senden einer weiteren Radio-Resource-Control-(RRC-)Nachricht über eine Uplink-Distributed-Control-Channel-(UL-DCCH-)Nachricht an die Basisstation umfasst, wobei die weitere RRC-Nachricht optional eine Angabe der ersten Ressource umfasst, für die der Interferenzzustand erfasst wurde.

9. Verfahren nach einem der Ansprüche 1 bis 8, wobei der Schritt zum Melden (S5b) der Interferenzbehebung durch das mobile Endgerät umfassend eine Angabe zur Interferenzbehebung für Kommunikationen über die erste Ressource durchgeführt wird innerhalb:
- einer weiteren RRC-Nachricht,
- einer Power-Headroom-Report-(PHR-)Nachricht,
- einer extended-Power-Headroom-Report-(e-PHR-)Nachricht,
- einer Channel-Quality-Identifier-(CQI-)Nachricht, oder
- einer Buffer-Status-Report-(BSR-)Nachricht,
zum Senden durch das mobile Endgerät an die Basisstation.

10. Verfahren nach Anspruch 9, wobei, wenn eine PHR/e-PHR-Nachricht vom mobilen Endgerät zum Melden der Interferenzbehebung an die Basisstation verwendet wird,
ein erster Wert eines reservierten Bits (R-Bit) der PHR/e-PHR-Nachricht einen behobenen Interferenzzustand an die Basisstationen für Kommunikationen über die erste Ressource angibt, und wobei optional,
das Senden der PHR/e-PHR-Nachricht umfassend den ersten Wert beim Erfassen durch das mobile Endgerät, dass der Interferenzzustand für Kommunikationen über die erste Ressource behoben wurde, ausgelöst wird.

11. Verfahren nach Anspruch 10, wobei, wenn eine PHR/e-PHR-Nachricht vom mobilen Endgerät zum Melden zur Interferenzbehebung an die Basisstation verwendet wird,
ein zweiter Wert eines reservierten Bits (R-Bit) der PHR/e-PHR-Nachricht einen anhaltenden Interferenzzustand für Kommunikationen über die erste Ressource angibt, und
PHR/e-PHR-Nachrichten umfassend den zweiten Wert durch das mobile Endgerät während eines Zeitraums zwischen dem Erfassen des Interferenzzustands für Kommunikationen mit der Basisstation über die erste Ressource und dem Erfassen, dass der Interferenzzustand für Kommunikationen über die erste Ressource behoben wurde, zu senden sind.

12. Verfahren nach einem der Ansprüche 9 bis 11, wobei, wenn eine e-PHR-Nachricht vom mobilen Endgerät zum Melden zur Interferenzbehebung an die Basisstation verwendet wird, ein weiteres reserviertes Bit der e-PHR-Nachricht die zum Kommunizieren mit der Drahtlos-Kommunikationsvorrichtung über die zweite Ressource verwendete Kommunikationstechnologie angibt und/oder wenigstens ein weiteres reserviertes Bit der e-PHR-Nachricht den Interferenzzustand auf einer Basis pro Zelle der in der ersten Ressource enthaltenen Zellen, für die der Interferenzzustand erfasst wurde, angibt.

13. Mobiles Endgerät zum Interferenzmelden in einem Mobilkommunikationssystem umfassend eine Basisstation und eine Drahtlos-Kommunikationsvorrichtung, wobei das mobile Endgerät in Kommunikation mit der Basisstation über eine erste Ressource steht und zur Kommunikation mit der Drahtlos-Kommunikationsvorrichtung über eine zweite Ressource ausgebildet ist, wobei das mobile Endgerät umfasst:
einen zum Erfassen eines Interferenzzustands zwischen der Kommunikation mit der Basisstation über die erste Ressource und einer Kommunikation mit der Drahtlos-Kommunikationsvorrichtung über die zweite Ressource ausgebildeten Prozessor;
eine zum Melden zum Interferenzzustand an die Basisstation ausgebildete Sendeschaltung;
eine zum Empfangen einer eine dritte Ressource zur Kommunikation mit der Basisstation angebenden Umkonfigurationsinformation ausgebildete Empfangsschaltung, wobei der Prozessor zum Umkonfigurieren der Kommunikation mit der Basisstation an die dritte Ressource ausgebildet ist; und wobei
der Prozessor ferner zum Erfassen, ob der Interferenzzustand für potentielle Kommunikationen mit der Basisstation über die erste Ressource anhält oder nicht, und, wenn der Interferenzzustand behoben wurde, die Sendeschaltung zum Melden zu einer Interferenzbehebung an die Basisstation für Kommunikationen über die erste Ressource ausgebildet ist.

14. Mobiles Endgerät nach Anspruch 13, wobei die Sendeschaltung ferner zum Melden zu einer Interferenzvermeidung an die Basisstation, wenn kein Interferenzzustand zwischen der umkonfigurierten Kommunikation mit der Basisstation über die dritte Ressource und der Kommunikation mit der Drahtlos-Kommunikationsvorrichtung über die zweite Ressource besteht, ausgebildet ist, und
der Prozessor zum Erfassen, ob der Interferenzzustand für potentielle Kommunikationen mit der Basisstation über die erste Ressource, nachdem die Sendeschaltung zur Interferenzvermeidung an die Basisstation meldet, anhält oder nicht, ausgebildet ist.

15. Computerlesbares Medium zum Speichern von Anweisungen, die, wenn von einem Prozessor eines mobilen Endgeräts ausgeführt, das mobile Endgerät zum Melden zu einer Interferenz in einem Mobilkommunikationssystem umfassend eine Basisstation und eine Drahtlos-Kommunikationsvorrichtung veranlassen, wobei das mobile Endgerät in Kommunikation mit der Basisstation über eine erste Ressource steht und zur Kommunikation mit der Drahtlos-Kommunikationsvorrichtung über eine zweite Ressource ausgebildet ist, durch:
Erfassen eines Interferenzzustands zwischen der Kommunikation mit der Basisstation über die erste Ressource und einer Kommunikation mit der Drahtlos-Kommunikationsvorrichtung über die zweite Ressource durch das mobile Endgerät;
Melden zum Interferenzzustand an die Basisstation;
Empfangen einer eine dritte Ressource zur Kommunikation mit der Basisstation angebenden Umkonfigurationsinformation und Umkonfigurieren der Kommunikation mit der Basisstation an die dritte Ressource; und
Erfassen, ob der Interferenzzustand für potentielle Kommunikationen mit der Basisstation über die erste Ressource anhält oder nicht, und, wenn der Interferenzzustand behoben wurde, Melden zu einer Interferenzbehebung an die Basisstation für Kommunikationen über die erste Ressource.

## Revendications

1. Procédé de rapport d'interférences par un terminal mobile dans un système de communication mobile comprenant une station de base et un dispositif de communication sans fil, le terminal mobile étant en communication avec la station de base par le biais d'une première ressource et étant configuré pour la communication avec le dispositif de communication sans fil par le biais d'une deuxième ressource, le procédé comprenant les étapes consistant à
détecter (S1), à l'aide du terminal mobile, une condition d'interférence entre la communication avec la station de base par le biais de la première ressource et une communication avec le dispositif de communication sans fil par le biais de la deuxième ressource;
communiquer (S2), à l'aide du terminal mobile, de la condition d'interférence à la station de base;
recevoir (S3a), à l'aide du terminal mobile, d'informations de reconfiguration indiquant une troisième ressource pour la communication avec la station de base et la reconfiguration (S3c) de la communication avec la station de base vers la troisième ressource; et
détecter (S5a), à l'aide du terminal mobile, si la condition d'interférence persiste ou non pour les communications potentielles avec la station de base par le biais de la première ressource, et, au cas où la condition d'interférence a été résolue, faire rapport (S5b), à l'aide du terminal mobile, sur une résolution d'interférence à la station de base pour les communications par le biais de la première ressource.

2. Procédé selon la revendication 1, dans lequel l'étape consistant à détecter si la condition d'interférence persiste ou non pour des communications potentielles avec la station de base par le biais de la première ressource est effectuée à l'aide du terminal mobile après une étape de:
communication (S4b), à l'aide du terminal mobile, d'un évitement d'interférence à la station de base, au cas où il n'y a pas de condition d'interférence (S4a) entre la communication reconfigurée avec la station de base par le biais de la troisième ressource et la communication avec le dispositif de communication sans fil par le biais de la deuxième ressource.

3. Procédé selon l'une des revendications 1 à 2, dans lequel l'étape consistant à détecter (S5a) si la condition d'interférence persiste ou non pour les communications potentielles avec la station de base par le biais de la première ressource est effectuée de manière répétée jusqu'à ce que la détection de la condition d'interférence ait été résolue.

4. Procédé selon l'une des revendications 1 à 3, dans lequel l'étape consistant à détecter (S5a) si la condition d'interférence persiste ou non pour des communications potentielles avec la station de base par le biais de la première ressource comprend la détermination à l'aide du terminal mobile:
- si la communication avec le dispositif de communication sans fil par le biais de la deuxième ressource a été interrompue, et/ou
- si la communication avec l'appareil de communication sans fil a été reconfigurée.

5. Procédé selon l'une des revendications 1 à 4, dans lequel l'étape de détection (S1), à l'aide du terminal mobile, de la condition d'interférence comprend la détection des conditions d'interférence entre les transmissions en liaison montante et/ou en liaison descendante avec la station de base par le biais de la première ressource et les transmissions en liaison montante et/ou en liaison descendante avec le dispositif de communication sans fil par le biais de la deuxième ressource.

6. Procédé selon l'une des revendications 1 à 5, dans lequel l'étape de rapport (S2), à l'aide du terminal mobile, de la condition d'interférence comprend la transmission d'une indication de la première ressource à la station de base.

7. Procédé selon l'une des revendications 1 à 6, dans lequel l'étape de rapport (S2), à l'aide du terminal mobile, de la condition d'interférence comprend la transmission d'un message de contrôle de ressource radio, RRC, par le biais d'un canal de contrôle distribué de liaison montante, UL- DCCH, à la station de base.

8. Procédé selon l'une des revendications 2 à 7, dans lequel l'étape de rapport (S4b), à l'aide du terminal mobile, sur l'évitement d'une interférence comprend la transmission d'un autre message de contrôle de ressources radio, RRC, par le biais d'un canal de contrôle distribué de liaison montante, UL- DCCH, à la station de base, dans lequel l'autre message RRC comprend éventuellement une indication de la première ressource pour laquelle la condition d'interférence a été détectée.

9. Procédé selon l'une des revendications 1 à 8, dans lequel l'étape de rapport (S5b) sur la résolution d'interférence est effectuée à l'aide du terminal mobile incluant une indication sur la résolution d'interférence pour les communications par le biais de la première ressource à l'intérieur:
- un autre message RRC,
- un message PHR, rapport sur la marge de manœuvre de puissance,
- un message e-PHR, rapport sur la marge de manœuvre de puissance étendue,
- un message CQI, identificateur de qualité de chaîne, ou
- un message BSR, rapport sur l'état de la mémoire tampon,
pour transmission à l'aide du terminal mobile à la station de base.

10. Procédé selon la revendication 9, dans laquelle, au cas où un message PHR/e-PHR est utilisé à l'aide du terminal mobile pour signaler la résolution de l'interférence à la station de base,
une première valeur d'un bit réservé (R-bit) du message PHR/e-PHR indique une condition d'interférence résolue à la station de base pour les communications par le biais de la première ressource, et dans laquelle, en option,
la transmission du message PHR/e-PHR incluant la première valeur est déclenchée dès que le terminal mobile détecte que la condition d'interférence a été résolue pour les communications par le biais de la première ressource.

11. Procédé selon la revendication 10, dans laquelle, au cas où un message PHR/e-PHR est utilisé à l'aide du terminal mobile pour signaler à la station de base la résolution de l'interférence,
une deuxième valeur d'un bit réservé (R-bit) du message PHR/e-PHR indique une condition d'interférence persistante pour les communications par le biais de la première ressource, et
les messages PHR/e-PHR incluant la deuxième valeur doivent être transmis à l'aide du terminal mobile pendant une période de temps entre la détection de la condition d'interférence pour les communications avec la station de base par le biais de la première ressource et la détection que la condition d'interférence a été résolue pour les communications par le biais de la première ressource.

12. Procédé selon l'une des revendications 9 à 11, dans lequel, au cas où un message e-PHR est utilisé à l'aide du terminal mobile pour signaler la résolution de l'interférence à la station de base, un autre bit réservé du message e-PHR indique la technologie de communication utilisée pour communiquer avec le dispositif de communication sans fil par le biais de la deuxième ressource et/ou au moins un autre bit réservé du message e-PHR indique la condition d'interférence sur une base par cellule des cellules incluses dans la première ressource pour laquelle la condition d'interférence a été détectée.

13. Terminal mobile de rapport d'interférences dans un système de communication mobile comprenant une station de base et un dispositif de communication sans fil, le terminal mobile étant en communication avec la station de base par le biais d'une première ressource et étant configuré pour la communication avec le dispositif de communication sans fil par le biais d'une deuxième ressource, le terminal mobile comprenant:
un processeur configuré pour détecter une condition d'interférence entre la communication avec la station de base par le biais de la première ressource et une communication avec le dispositif de communication sans fil par le biais de la deuxième ressource;
un circuit de transmission configuré pour signaler la condition d'interférence à la station de base;
un circuit de réception configuré pour recevoir des informations de reconfiguration indiquant une troisième ressource pour la communication avec la station de base, le processeur étant configuré pour reconfigurer la communication avec la station de base vers la troisième ressource; et dans lequel
le processeur est en outre configuré pour détecter si la condition d'interférence persiste ou non pour les communications potentielles avec la station de base par le biais de la première ressource, et, au cas où la condition d'interférence a été résolue, le circuit de transmission est configuré pour signaler une résolution d'interférence à la station de base pour les communications par le biais de la première ressource.

14. Terminal mobile selon la revendication 13, dans lequel le circuit de transmission est en outre configuré pour signaler à la station de base une évitement d'interférence, au cas où il n'y a pas de condition d'interférence entre la communication reconfigurée avec la station de base par le biais de la troisième ressource et la communication avec le dispositif de communication sans fil par le biais de la deuxième ressource, et dans le cas où la condition d'interférence a été résolue, le circuit de transmission est configuré pour signaler à la station de base une résolution d'interférence pour les communications par le biais de la première ressource.
le processeur est configuré pour détecter si la condition d'interférence persiste ou non pour les communications potentielles avec la station de base par le biais de la première ressource après que le circuit de transmission ait fait rapport sur l'évitement de l'interférence à la station de base.

15. Support lisible par ordinateur stockant des instructions qui, lorsqu'elles sont exécutées par un processeur d'un terminal mobile, amènent le terminal mobile à signaler une interférence dans un système de communication mobile comprenant une station de base et un dispositif de communication sans fil, le terminal mobile étant en communication avec la station de base par le biais d'une première ressource et étant configuré pour communiquer avec le dispositif de communication sans fil par le biais d'une deuxième ressource, en:
en détectant, à l'aide du terminal mobile, une condition d'interférence entre la communication avec la station de base par le biais de la première ressource et une communication avec le dispositif de communication sans fil par le biais de la deuxième ressource;
signalant la condition d'interférence à la station de base;
recevant des informations de reconfiguration indiquant une troisième ressource pour la communication avec la station de base et en reconfigurant la communication avec la station de base vers la troisième ressource; et
détectant si la condition d'interférence persiste ou non pour les communications potentielles avec la station de base par le biais de la première ressource, et, dans le cas où la condition d'interférence a été résolue, faire un rapport sur la résolution de l'interférence à la station de base pour les communications par le biais de la première ressource.
